# EUROPEAN PATENT APPLICATION

(11) **EP 4 660 992 A1**
(43) Date of publication of application: **10.12.2025**
(21) Application number: 24774231.5
(22) Date of filing: 21.03.2024
(51) Int. Cl.: G09G 5/10, G06F 3/14

(54) **BRIGHTNESS ADJUSTMENT SYSTEM AND METHOD, AND ELECTRONIC DEVICE**

(30) Priority: 22.03.2023 CN 202310293961
(71) Applicant: Huawei Technologies Co., Ltd., Shenzhen, Guangdong 518129 (CN)
(72) Inventor: ZHOU, Xueer, Shenzhen, Guangdong 518129 (CN); LU, Yuedong, Shenzhen, Guangdong 518129 (CN); LI, Ronggen, Shenzhen, Guangdong 518129 (CN); ZHOU, Xingchen, Shenzhen, Guangdong 518129 (CN); LI, Xiao, Shenzhen, Guangdong 518129 (CN); QIAO, Puyao, Shenzhen, Guangdong 518129 (CN)
(74) Representative: Pfenning, Meinig & Partner mbB
(86) International application number: PCT/CN2024/083110
(87) International publication number: WO 2024/193667

(57) **Abstract**

This application discloses a brightness adjustment system and method, and an electronic device. In the system, a first electronic device is configured to: in response to a first operation triggered by a user, display a first area and a second area on a first display of the first electronic device, where the first operation indicates to start adjusting display brightness of a second display of a second electronic device, the first area and the second area each are covered with a mask, and display brightness of the second area after covering with the mask is equal to the display brightness of the second display, or perceived brightness of the second area after covering with the mask is equal to perceived brightness of the second display; the second electronic device is configured to: determine first target brightness, adjust the display brightness of the second display based on the first target brightness, and send the first target brightness to the first electronic device; and the first electronic device is further configured to adjust transparency of the mask in the second area based on the first target brightness. In this way, brightness adjustment efficiency and adjustment effect of a display are improved.

## Description

### CROSS-REFERENCE TO RELATED APPLICATIONS

This application claims priority to Chinese Patent Application No. 202310293961.5, filed with the China National Intellectual Property Administration on March 22, 2023 and entitled "BRIGHTNESS ADJUSTMENT SYSTEM AND METHOD, AND ELECTRONIC DEVICE", which is incorporated herein by reference in its entirety.

### TECHNICAL FIELD

This application relates to the field of electronic device technologies, and in particular, to a brightness adjustment system and method, and an electronic device.

### BACKGROUND

When using an electronic device having a display, a user usually has a requirement for adjusting brightness of the display. Generally, the brightness of the display of the electronic device may be directly adjusted. Alternatively, a display of an electronic device may be used to adjust brightness of a display of another electronic device, that is, brightness is adjusted across devices. Alternatively, a display of an electronic device is used to adjust brightness of another display of the electronic device, that is, brightness is adjusted across displays of a same device. However, when adjusting brightness across devices or adjusting brightness across displays of a same device, the user can only imagine brightness adjustment effect of a controlled display according to experience, but cannot intuitively perceive the brightness adjustment effect of the controlled display on a controlling display. Consequently, brightness adjustment efficiency of the display is low, and the adjustment effect is poor.

### SUMMARY

Embodiments of this application provide a brightness adjustment system and method, and an electronic device, to improve brightness adjustment efficiency and adjustment effect of a display.

According to a first aspect, this application provides a brightness adjustment system. The brightness adjustment system includes a first electronic device and a second electronic device. The first electronic device may: in response to a first operation triggered by a user based on a first display of the first electronic device, display a first area and a second area on the first display, where the first operation indicates to start adjusting display brightness of a second display of the second electronic device, the first area and the second area each are covered with a mask, display brightness of the first area after covering with the mask is equal to display brightness of the first display before covering with the mask, or perceived brightness of the first area after covering with the mask is equal to perceived brightness of the first display before covering with the mask, and display brightness of the second area after covering with the mask is equal to the display brightness of the second display, or perceived brightness of the second area after covering with the mask is equal to perceived brightness of the second display. The second electronic device may determine first target brightness, adjust the display brightness of the second display based on the first target brightness, and send the first target brightness to the first electronic device. The first electronic device may further adjust transparency of the mask in the second area based on the first target brightness.

Based on the foregoing system, the first electronic device may display two areas on the first display of the first electronic device. The two areas each are covered with a mask. The display brightness of the first area after covering with the mask is equal to the display brightness of the first display before covering with the mask, or the perceived brightness of the first area after covering with the mask is equal to the perceived brightness of the first display before covering with the mask. The display brightness of the second area after covering with the mask is equal to the display brightness of the second display, or the perceived brightness of the second area after covering with the mask is equal to the perceived brightness of the second display. In this way, when adjusting the display brightness of the second display by using the first display, the user can intuitively perceive brightness adjustment effect of the second display based on brightness adjustment effect of the second area displayed on the first display, thereby improving brightness adjustment efficiency and adjustment effect of the display.

In a possible design, the first electronic device may be specifically configured to set, in the following manner, transparency of the mask that covers each of the first area and the second area: obtaining first display brightness of the first display before covering with the mask and second display brightness of the second display; and setting transparency of the mask in the first area based on the first display brightness, and setting transparency of the mask in the second area based on the second display brightness.

According to this design, the first electronic device may determine the display brightness of the first display before covering with the mask and the display brightness of the second display, so that the display brightness of the first area after covering with the mask is equal to the display brightness of the first display before covering with the mask, and the display brightness of the second area after covering with the mask is equal to the display brightness of the second display. The user can intuitively perceive brightness adjustment effect of the second display based on the display brightness of the second area displayed on the first display, thereby improving brightness adjustment efficiency and adjustment effect of the display.

In a possible design, the first electronic device may be specifically configured to set, in the following manner, transparency of the mask that covers each of the first area and the second area: obtaining first display brightness of the first display before covering with the mask and second display brightness of the second display, and obtaining first ambient light brightness of an environment in which the first display is located and second ambient light brightness of an environment in which the second display is located; determining, based on the first display brightness and the first ambient light brightness, first perceived brightness of the first display before covering with the mask, and determining second perceived brightness of the second display based on the second display brightness and the second ambient light brightness; and setting transparency of the mask in the first area based on the first perceived brightness, and setting transparency of the mask in the second area based on the second perceived brightness.

According to this design, the first electronic device may separately determine the perceived brightness of the first display before covering with the mask and the perceived brightness of the second display based on the display brightness of the first display before covering with the mask, the display brightness of the second display, the ambient light brightness of the environment in which the first display is located, and the ambient light brightness of the environment in which the second display is located, so that the perceived brightness of the first area after covering with the mask is equal to the perceived brightness of the first display before covering with the mask, and the perceived brightness of the second area after covering with the mask is equal to the perceived brightness of the second display. The user can intuitively perceive brightness adjustment effect of the second display based on the perceived brightness of the second area displayed on the first display, thereby improving brightness adjustment efficiency and adjustment effect of the display.

In a possible design, the first ambient light brightness is obtained by using an ambient light sensor in the first display, or is obtained by using an ambient light sensor in a third electronic device, and the third electronic device is in a connected state with the first electronic device; and the second ambient light brightness is obtained by using an ambient light sensor in the second display, or is obtained by using an ambient light sensor in a fourth electronic device, and the fourth electronic device is in a connected state with the second electronic device.

According to this design, the first electronic device may obtain, by using the ambient light sensors in the first display (or the third electronic device) and the second display (or the fourth electronic device), the ambient light brightness of the environments in which the first display and the second display are located, to determine the perceived brightness of the first display before covering with the mask and the perceived brightness of the second display, so that the perceived brightness of the first area after covering with the mask is equal to the perceived brightness of the first display before covering with the mask, and the perceived brightness of the second area after covering with the mask is equal to the perceived brightness of the second display. The user can intuitively perceive brightness adjustment effect of the second display based on the perceived brightness of the second area displayed on the first display, thereby improving brightness adjustment efficiency and adjustment effect of the display.

In a possible design, the first electronic device may be specifically configured to set the transparency of the mask in the second area based on the second perceived brightness in the following manner: when the first ambient light brightness is less than the second ambient light brightness, decreasing the transparency of the mask in the second area corresponding to the second perceived brightness or decreasing the first display brightness; or when the first ambient light brightness is greater than or equal to the second ambient light brightness, increasing the transparency of the mask in the second area corresponding to the second perceived brightness or increasing the first display brightness.

According to this design, when the ambient light brightness of the environment in which the first display is located is different from the ambient light brightness of the environment in which the second display is located, the first electronic device may adjust the transparency of the mask in the second area corresponding to the perceived brightness of the second display or the display brightness of the first display, so that when a user on a first display side adjusts the display brightness of the second display by using the first display, brightness adjustment effect of the second display perceived by the user on the first display side is the same as brightness adjustment effect of the second display viewed by a user on a second display side.

In a possible design, the first electronic device may further send a first display brightness level to the second electronic device in response to a second operation triggered by the user based on the first display, where the second operation indicates to adjust a display brightness level of the second display to the first display brightness level; and the second electronic device may be specifically configured to determine the first target brightness in the following manner: receiving the first display brightness level from the first electronic device, and determining that the first target brightness is display brightness of the second display corresponding to the first display brightness level.

According to this design, the display brightness of the second display may be adjusted by the user on the first display side by using a control of the first display. The second electronic device may notify the first electronic device when the display brightness of the second display changes. The first electronic device may adjust the transparency of the mask in the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the second electronic device may be specifically configured to determine the first target brightness in the following manner: determining the first target brightness in response to a third operation triggered by the user based on the first display, where the third operation is a projection-based reverse control operation, and the third operation indicates to adjust the display brightness of the second display to the first target brightness.

According to this design, the display brightness of the second display may be adjusted by the user on the first display side by using a control of the second display (that is, projection-based reverse control). The second electronic device may notify the first electronic device when the display brightness of the second display changes. The first electronic device may adjust the transparency of the mask in the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the first electronic device may further: before the response to the second operation or the third operation triggered by the user based on the first display, determine whether the first display brightness of the first display is less than the second display brightness of the second display; and when the first display brightness is less than the second display brightness, adjust the first display brightness and the transparency of the mask in the first area based on second target brightness, where the second target brightness is greater than or equal to the second display brightness.

According to this design, the first electronic device may increase the display brightness of the first display when the display brightness of the first display is less than the second display brightness of the second display, so that increased display brightness of the first display is greater than or equal to the display brightness of the second display. This avoids a case in which because the display brightness of the first display is less than the display brightness of the second display, consistency between the display brightness of the second area on the first display and the display brightness of the second display or between the perceived brightness of the second area on the first display and the perceived brightness of the second display cannot be achieved by adjusting the transparency of the mask in the second area.

In a possible design, the first electronic device may be specifically configured to adjust the transparency of the mask in the first area based on the second target brightness in the following manner: obtaining the first ambient light brightness of the environment in which the first display is located; and adjusting the transparency of the mask in the first area based on the second target brightness and the first ambient light brightness.

According to this design, the first electronic device may obtain, by using the ambient light sensor in the first display (or the third electronic device), the ambient light brightness of the environment in which the first display is located, to determine perceived brightness of the first display after the display brightness of the first display is increased, so that the perceived brightness of the first area after covering with the mask is equal to the perceived brightness of the first display before covering with the mask, thereby improving brightness adjustment efficiency and adjustment effect of the display.

In a possible design, the first electronic device may further: before the response to the second operation or the third operation triggered by the user based on the first display, obtain a first display brightness range of the first display and a second display brightness range of the second display, and determine a third display brightness range, where the third display brightness range is an overlapping range between the first display brightness range and the second display brightness range; and display a brightness adjustment icon in the first area and/or a brightness adjustment icon in the second area, where the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon includes the second display brightness range and the third display brightness range, the second display brightness range indicates a display brightness range of the second display, and the third display brightness range indicates a display brightness range of the second area.

According to this design, the first electronic device may use the display brightness range of the second display as an adjustment range for adjusting the display brightness of the second display by the user on the first display side, and mark the overlapping range between the display brightness range of the first display and the display brightness range of the second display in the adjustment range for adjusting the display brightness of the second display by the user on the first display side, so as to prompt the user that the display brightness range of the second display is the second display brightness range, and the display brightness range of the second area on the first display is the third display brightness range, thereby improving brightness adjustment efficiency and adjustment effect of the display.

In a possible design, the first electronic device may be specifically configured to adjust the transparency of the mask in the second area based on the first target brightness in the following manner: obtaining the second ambient light brightness of the environment in which the second display is located; and adjusting the transparency of the mask in the second area based on the first target brightness and the second ambient light brightness.

According to this design, the first electronic device may determine, by using the ambient light sensor in the second display (or the fourth electronic device), the ambient light brightness of the environment in which the second display is located, to determine perceived brightness of the second display after the display brightness of the second display is increased, so that the perceived brightness of the second area after covering with the mask is equal to the perceived brightness of the second display, thereby improving brightness adjustment efficiency and adjustment effect of the display.

In a possible design, the second electronic device may be specifically configured to determine the first target brightness in the following manner: determining the first target brightness in response to a fourth operation triggered by the user based on the second display, where the fourth operation indicates to adjust the display brightness of the second display to the first target brightness; or obtaining the second ambient light brightness of the environment in which the second display is located, and determining, based on a first mapping relationship corresponding to the second display, that the first target brightness is display brightness corresponding to the second ambient light brightness, where the first mapping relationship indicates a mapping relationship between ambient light brightness of the environment and display brightness; or determining the first target brightness based on a brightness adjustment indication of a first application, where the brightness adjustment indication indicates to adjust the display brightness of the second display to the first target brightness.

According to this design, the display brightness of the second display may be adjusted by the user on the second display side, or may be automatically adjusted by the second electronic device based on the ambient light brightness of the environment in which the second display is located, or may be automatically adjusted by an application installed in the second electronic device. The second electronic device may notify the first electronic device when the display brightness of the second display changes. The first electronic device may adjust the transparency of the mask in the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the first electronic device may be specifically configured to adjust the transparency of the mask in the second area based on the first target brightness in the following manner: obtaining the first ambient light brightness of the environment in which the first display is located and the second ambient light brightness of the environment in which the second display is located; determining, based on the first mapping relationship corresponding to the second display, third display brightness corresponding to the second ambient light brightness and fourth display brightness corresponding to the first ambient light brightness, where the first mapping relationship indicates a mapping relationship between ambient light brightness of the environment and display brightness; determining third target brightness based on the third display brightness, the fourth display brightness, and the first target brightness, where a difference between the third display brightness and the first target brightness is a first difference, a difference between the fourth display brightness and the third target brightness is a second difference, and the first difference is positively correlated with the second difference; and adjusting the transparency of the mask in the second area based on the third target brightness.

According to this design, the first electronic device may determine, based on the ambient light brightness of the environment in which the first display is located, the ambient light brightness of the environment in which the second display is located, the mapping relationship between the ambient light brightness of the environment in which the second display is located and the display brightness of the second display, and the display brightness that is of the second display and that is adjusted by the user on a second electronic device side, the display brightness corresponding to the transparency of the mask in the second area displayed on the first display. A brightness habit of the user on the second display side is considered, so that brightness adjustment effect of the second display perceived by the user on the first display side is the same as brightness adjustment effect of the second display viewed by the user on the second display side.

According to a second aspect, this application further provides a brightness adjustment method, applied to a first electronic device. The method includes: in response to a first operation triggered by a user based on a first display of the first electronic device, displaying a first area and a second area on the first display, where the first operation indicates to start adjusting display brightness of a second display of a second electronic device, the first area and the second area each are covered with a mask, display brightness of the first area after covering with the mask is equal to display brightness of the first display before covering with the mask, or perceived brightness of the first area after covering with the mask is equal to perceived brightness of the first display before covering with the mask, and display brightness of the second area after covering with the mask is equal to the display brightness of the second display, or perceived brightness of the second area after covering with the mask is equal to perceived brightness of the second display; and receiving first target brightness from the second electronic device, and adjusting transparency of the mask in the second area based on the first target brightness.

In a possible design, before displaying the first area and the second area on the first display of the first electronic device, the first electronic device may further obtain first display brightness of the first display before covering with the mask and second display brightness of the second display; and set transparency of the mask in the first area based on the first display brightness, and set transparency of the mask in the second area based on the second display brightness.

In a possible design, before displaying the first area and the second area on the first display of the first electronic device, the first electronic device may further obtain first display brightness of the first display before covering with the mask and second display brightness of the second display, and obtain first ambient light brightness of an environment in which the first display is located and second ambient light brightness of an environment in which the second display is located; determine, based on the first display brightness and the first ambient light brightness, first perceived brightness of the first display before covering with the mask, and determine second perceived brightness of the second display based on the second display brightness and the second ambient light brightness; and set transparency of the mask in the first area based on the first perceived brightness, and set transparency of the mask in the second area based on the second perceived brightness.

In a possible design, the first ambient light brightness is obtained by using an ambient light sensor in the first display, or is obtained by using an ambient light sensor in a third electronic device, and the third electronic device is in a connected state with the first electronic device; and the second ambient light brightness is obtained by using an ambient light sensor in the second display, or is obtained by using an ambient light sensor in a fourth electronic device, and the fourth electronic device is in a connected state with the second electronic device.

In a possible design, when setting the transparency of the mask in the second area based on the second perceived brightness, the first electronic device may: when the first ambient light brightness is less than the second ambient light brightness, decrease the transparency of the mask in the second area corresponding to the second perceived brightness or decrease the first display brightness; or when the first ambient light brightness is greater than or equal to the second ambient light brightness, increase the transparency of the mask in the second area corresponding to the second perceived brightness or increase the first display brightness.

In a possible design, when receiving the first target brightness from the second electronic device, the first electronic device may send a first display brightness level to the second electronic device in response to a second operation triggered by the user based on the first display, where the second operation indicates to adjust a display brightness level of the second display to the first display brightness level; and receive the first target brightness from the second electronic device, where the first target brightness is display brightness of the second display that is corresponding to the first display brightness level and that is determined by the second electronic device.

In a possible design, when receiving the first target brightness from the second electronic device, the first electronic device may receive the first target brightness from the second electronic device, where the first target brightness is determined by the second electronic device in response to a third operation triggered by the user based on the first display, the third operation is a projection-based reverse control operation, and the third operation indicates to adjust the display brightness of the second display to the first target brightness.

In a possible design, the first electronic device may further: before the response to the second operation or the third operation triggered by the user based on the first display, determine whether the first display brightness of the first display is less than the second display brightness of the second display; and when the first display brightness is less than the second display brightness, adjust the first display brightness and the transparency of the mask in the first area based on second target brightness, where the second target brightness is greater than or equal to the second display brightness.

In a possible design, when adjusting the transparency of the mask in the first area based on the second target brightness, the first electronic device may obtain the second ambient light brightness of the environment in which the second display is located; and adjust the transparency of the mask in the first area based on the second target brightness and the first ambient light brightness.

In a possible design, the first electronic device may further: before the response to the second operation or the third operation triggered by the user based on the first display, obtain a first display brightness range of the first display and a second display brightness range of the second display, and determine a third display brightness range, where the third display brightness range is an overlapping range between the first display brightness range and the second display brightness range; and display a brightness adjustment icon in the first area and/or a brightness adjustment icon in the second area, where the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon includes the second display brightness range and the third display brightness range, the second display brightness range indicates a display brightness range of the second display, and the third display brightness range indicates a display brightness range of the second area.

In a possible design, when adjusting the transparency of the mask in the second area based on the first target brightness, the first electronic device may obtain the second ambient light brightness of the environment in which the second display is located; and adjust the transparency of the mask in the second area based on the first target brightness and the second ambient light brightness.

In a possible design, when receiving the first target brightness from the second electronic device, the first electronic device may receive the first target brightness from the second electronic device, where the first target brightness is determined by the second electronic device in response to a fourth operation triggered by the user based on the second display, and the fourth operation indicates to adjust the display brightness of the second display to the first target brightness, or the first target brightness is display brightness that is corresponding to the second ambient light brightness and that is determined by the second electronic device based on the second ambient light brightness of the environment in which the second display is located and a first mapping relationship corresponding to the second display, and the first mapping relationship indicates a mapping relationship between ambient light brightness of the environment and display brightness, or the first target brightness is determined by the second electronic device based on a brightness adjustment indication of a first application, and the brightness adjustment indication indicates to adjust the display brightness of the second display to the first target brightness.

In a possible design, when adjusting the transparency of the mask in the second area based on the first target brightness, the first electronic device may obtain the first ambient light brightness of the environment in which the first display is located and the second ambient light brightness of the environment in which the second display is located; determine, based on the first mapping relationship corresponding to the second display, third display brightness corresponding to the second ambient light brightness and fourth display brightness corresponding to the first ambient light brightness, where the first mapping relationship indicates a mapping relationship between ambient light brightness of the environment and display brightness; determine third target brightness based on the third display brightness, the fourth display brightness, and the first target brightness, where a difference between the third display brightness and the first target brightness is a first difference, a difference between the fourth display brightness and the third target brightness is a second difference, and the first difference is positively correlated with the second difference; and adjust the transparency of the mask in the second area based on the third target brightness.

For beneficial effects of the second aspect and the possible designs of the second aspect, refer to descriptions of the beneficial effects of the method according to any one of the first aspect and the possible designs of the first aspect.

According to a third aspect, this application further provides a brightness adjustment system. The brightness adjustment system includes a first electronic device and a second electronic device. The first electronic device may: in response to a first operation triggered by a user based on a first display of the first electronic device, display a first area and a second area on the first display, where the first operation indicates to start adjusting display brightness of a second display of the second electronic device, the first area and the second area each are covered with a mask, and display brightness of the first area and the second area after covering with the mask is equal to perceived brightness of the second display, or perceived brightness of the first area and the second area after covering with the mask is equal to perceived brightness of the second display. The second electronic device may determine first target brightness, adjust the display brightness of the second display based on the first target brightness, and send the first target brightness to the first electronic device. The first electronic device may further adjust transparency of the masks in the first area and the second area based on the first target brightness.

Based on the foregoing system, the first electronic device may display two areas on the first display of the first electronic device. The two areas each are covered with a mask. The display brightness of the first area and the second area after covering with the mask is equal to the display brightness of the second display, or the perceived brightness of the first area and the second area after covering with the mask is equal to the perceived brightness of the second display. In this way, when adjusting the display brightness of the second display by using the first display, the user can intuitively perceive brightness adjustment effect of the second display based on brightness adjustment effect of the first area and the second area displayed on the first display, thereby improving brightness adjustment efficiency and adjustment effect of the display.

In a possible design, the first electronic device may be specifically configured to set, in the following manner, transparency of the mask that covers each of the first area and the second area: obtaining second display brightness of the second display; and setting the transparency of the masks in the first area and the second area based on the second display brightness.

According to this design, the first electronic device may determine the display brightness of the second display, so that the display brightness of the first area and the second area after covering with the mask is equal to the display brightness of the second display. The user can intuitively perceive brightness adjustment effect of the second display based on the display brightness of the first area and the second area displayed on the first display, thereby improving brightness adjustment efficiency and adjustment effect of the display.

In a possible design, the first electronic device may be specifically configured to set, in the following manner, transparency of the mask that covers each of the first area and the second area: obtaining second display brightness of the second display, and obtaining second ambient light brightness of an environment in which the second display is located; determining second perceived brightness of the second display based on the second display brightness and the second ambient light brightness; and setting the transparency of the masks in the first area and the second area based on the second perceived brightness.

According to this design, the first electronic device may determine the perceived brightness of the second display based on the display brightness of the second display and the ambient light brightness of the environment in which the second display is located, so that the perceived brightness of the first area and the second area after covering with the mask is equal to the perceived brightness of the second display. The user can intuitively perceive brightness adjustment effect of the second display based on the perceived brightness of the first area and the second area displayed on the first display, thereby improving brightness adjustment efficiency and adjustment effect of the display.

In a possible design, the first electronic device may be specifically configured to set the transparency of the masks in the first area and the second area based on the second perceived brightness in the following manner: obtaining first display brightness of the first display, and obtaining first ambient light brightness of an environment in which the first display is located; and when the first ambient light brightness is less than the second ambient light brightness, decreasing the transparency of the masks in the first area and the second area corresponding to the second perceived brightness or decreasing the first display brightness; or when the first ambient light brightness is greater than or equal to the second ambient light brightness, increasing the transparency of the masks in the first area and the second area corresponding to the second perceived brightness or increasing the first display brightness.

According to this design, when the ambient light brightness of the environment in which the first display is located is different from the ambient light brightness of the environment in which the second display is located, the first electronic device may adjust the transparency of the masks in the first area and the second area corresponding to the perceived brightness of the second display or the display brightness of the first display, so that when a user on a first display side adjusts the display brightness of the second display by using the first display, brightness adjustment effect of the second display perceived by the user on the first display side is the same as brightness adjustment effect of the second display viewed by a user on a second display side.

In a possible design, the first ambient light brightness is obtained by using an ambient light sensor in the first display, or is obtained by using an ambient light sensor in a third electronic device, and the third electronic device is in a connected state with the first electronic device; and the second ambient light brightness is obtained by using an ambient light sensor in the second display, or is obtained by using an ambient light sensor in a fourth electronic device, and the fourth electronic device is in a connected state with the second electronic device.

According to this design, a plurality of manners of obtaining, by the first electronic device, the ambient light brightness of the environments in which the first display and the second display are located are provided. For example, the first electronic device may obtain, by using the ambient light sensors in the first display (or the third electronic device) and the second display (or the fourth electronic device), the ambient light brightness of the environments in which the first display and the second display are located.

In a possible design, the first electronic device may further send a first display brightness level to the second electronic device in response to a second operation triggered by the user based on the first display, where the second operation indicates to adjust a display brightness level of the second display to the first display brightness level. The second electronic device may specifically determine the first target brightness in the following manner: receiving the first display brightness level from the first electronic device, and determining that the first target brightness is display brightness of the second display corresponding to the first display brightness level.

According to this design, the display brightness of the second display may be adjusted by the user on the first display side by using a control of the first display. The second electronic device may notify the first electronic device when the display brightness of the second display changes. The first electronic device may adjust the transparency of the masks in the first area and the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the second electronic device may be specifically configured to determine the first target brightness in the following manner: determining the first target brightness in response to a third operation triggered by the user based on the first display, where the third operation indicates to adjust the display brightness of the second display to the first target brightness.

According to this design, the display brightness of the second display may be adjusted by the user on the first display side by using a control of the second display (that is, projection-based reverse control). The second electronic device may notify the first electronic device when the display brightness of the second display changes. The first electronic device may adjust the transparency of the masks in the first area and the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the first electronic device may further: before the response to the second operation or the third operation triggered by the user based on the first display, determine whether the first display brightness of the first display is less than the second display brightness of the second display; and when the first display brightness is less than the second display brightness, adjust the first display brightness based on second target brightness, where the second target brightness is greater than or equal to the second display brightness.

According to this design, the first electronic device may increase the display brightness of the first display when the display brightness of the first display is less than the second display brightness of the second display, so that increased display brightness of the first display is greater than or equal to the display brightness of the second display. This avoids a case in which because the display brightness of the first display is less than the display brightness of the second display, consistency between the display brightness of the first area and the second area on the first display and the display brightness of the second display or between the perceived brightness of the first area and the second area on the first display and the perceived brightness of the second display cannot be achieved by adjusting the transparency of the masks in the first area and the second area.

In a possible design, the first electronic device may further: before the response to the second operation or the third operation triggered by the user based on the first display, obtain a first display brightness range of the first display and a second display brightness range of the second display, and determine a third display brightness range, where the third display brightness range is an overlapping range between the first display brightness range and the second display brightness range; and display a brightness adjustment icon in the first area and/or a brightness adjustment icon in the second area, where the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon includes the second display brightness range and the third display brightness range, the second display brightness range indicates a display brightness range of the second display, and the third display brightness range indicates display brightness ranges of the first area and the second area.

According to this design, the first electronic device may use the display brightness range of the second display as an adjustment range for adjusting the display brightness of the second display by the user on the first display side, and mark the overlapping range between the display brightness range of the first display and the display brightness range of the second display in the adjustment range for adjusting the display brightness of the second display by the user on the first display side, so as to prompt the user that the display brightness range of the second display is the second display brightness range, and the display brightness ranges of the first area and the second area on the first display are the third display brightness range, thereby improving brightness adjustment efficiency and adjustment effect of the display.

In a possible design, the first electronic device may be specifically configured to adjust the transparency of the masks in the first area and the second area based on the first target brightness in the following manner: obtaining the second ambient light brightness of the environment in which the second display is located; and adjusting the transparency of the masks in the first area and the second area based on the first target brightness and the second ambient light brightness.

According to this design, the first electronic device may determine, by using the ambient light sensor in the second display (or the fourth electronic device), the ambient light brightness of the environment in which the second display is located, to determine perceived brightness of the second display after the display brightness of the second display is increased, so that the perceived brightness of the first area and the second area after covering with the mask is equal to the perceived brightness of the second display, thereby improving brightness adjustment efficiency and adjustment effect of the display.

In a possible design, the second electronic device may be specifically configured to determine the first target brightness in the following manner: determining the first target brightness in response to a fourth operation triggered by the user based on the second display, where the fourth operation indicates to adjust the display brightness of the second display to the first target brightness; or obtaining the second ambient light brightness of the environment in which the second display is located, and determining, based on a first mapping relationship corresponding to the second display, that the first target brightness is display brightness corresponding to the second ambient light brightness, where the first mapping relationship indicates a mapping relationship between ambient light brightness of the environment and display brightness; or determining the first target brightness based on a brightness adjustment indication of a first application, where the brightness adjustment indication indicates to adjust the display brightness of the second display to the first target brightness.

According to this design, the display brightness of the second display may be adjusted by the user on the second display side, or may be automatically adjusted by the second electronic device based on the ambient light brightness of the environment in which the second display is located, or may be automatically adjusted by an application installed in the second electronic device. The second electronic device may notify the first electronic device when the display brightness of the second display changes. The first electronic device may adjust the transparency of the masks in the first area and the second area based on display brightness of the second electronic device, so that brightness adjustment effect of the second display perceived by the user on the first display side is the same as brightness adjustment effect of the second display viewed by the user on the second display side. This improves brightness adjustment efficiency and adjustment effect of the display.

In a possible design, the first electronic device may be specifically configured to adjust the transparency of the masks in the first area and the second area based on the first target brightness in the following manner: obtaining the first ambient light brightness of the environment in which the first display is located and the second ambient light brightness of the environment in which the second display is located; determining, based on the first mapping relationship corresponding to the second display, third display brightness corresponding to the second ambient light brightness and fourth display brightness corresponding to the first ambient light brightness, where the first mapping relationship indicates a mapping relationship between ambient light brightness of the environment and display brightness; determining third target brightness based on the third display brightness, the fourth display brightness, and the first target brightness, where a difference between the third display brightness and the first target brightness is a first difference, a difference between the fourth display brightness and the third target brightness is a second difference, and the first difference is positively correlated with the second difference; and adjusting the transparency of the masks in the first area and the second area based on the third target brightness.

According to this design, the first electronic device may determine, based on the ambient light brightness of the environment in which the first display is located, the ambient light brightness of the environment in which the second display is located, the mapping relationship between the ambient light brightness of the environment in which the second display is located and the display brightness of the second display, and the display brightness that is of the second display and that is adjusted by the user on a second electronic device side, the display brightness corresponding to the transparency of the masks in the first area and the second area displayed on the first display. A brightness habit of the user on the second display side is considered, so that brightness adjustment effect of the second display perceived by the user on the first display side is the same as brightness adjustment effect of the second display viewed by the user on the second display side.

According to a fourth aspect, this application further provides a brightness adjustment method, applied to a first electronic device. The method includes: in response to a first operation triggered by a user based on a first display of the first electronic device, displaying a first area and a second area on the first display, where the first operation indicates to start adjusting display brightness of a second display of a second electronic device, the first area and the second area each are covered with a mask, and display brightness of the first area and the second area after covering with the mask is equal to perceived brightness of the second display, or perceived brightness of the first area and the second area after covering with the mask is equal to perceived brightness of the second display; and receiving first target brightness from the second electronic device, and adjusting transparency of the masks in the first area and the second area based on the first target brightness.

In a possible design, before displaying the first area and the second area on the first display of the first electronic device, the first electronic device may further obtain second display brightness of the second display; and set the transparency of the masks in the first area and the second area based on the second display brightness.

In a possible design, before displaying the first area and the second area on the first display of the first electronic device, the first electronic device may further obtain second display brightness of the second display, and obtain second ambient light brightness of an environment in which the second display is located; determine second perceived brightness of the second display based on the second display brightness and the second ambient light brightness; and set the transparency of the masks in the first area and the second area based on the second perceived brightness.

In a possible design, when setting the transparency of the masks in the first area and the second area based on the second perceived brightness, the first electronic device may obtain first display brightness of the first display, and obtain first ambient light brightness of an environment in which the first display is located; and when the first ambient light brightness is less than the second ambient light brightness, decrease the transparency of the masks in the first area and the second area corresponding to the second perceived brightness or decrease the first display brightness; or when the first ambient light brightness is greater than or equal to the second ambient light brightness, increase the transparency of the masks in the first area and the second area corresponding to the second perceived brightness or increase the first display brightness.

In a possible design, the first ambient light brightness is obtained by using an ambient light sensor in the first display, or is obtained by using an ambient light sensor in a third electronic device, and the third electronic device is in a connected state with the first electronic device; and the second ambient light brightness is obtained by using an ambient light sensor in the second display, or is obtained by using an ambient light sensor in a fourth electronic device, and the fourth electronic device is in a connected state with the second electronic device.

In a possible design, when receiving the first target brightness from the second electronic device, the first electronic device may send a first display brightness level to the second electronic device in response to a second operation triggered by the user based on the first display, where the second operation indicates to adjust a display brightness level of the second display to the first display brightness level; and receive the first target brightness from the second electronic device, where the first target brightness is display brightness of the second display that is corresponding to the first display brightness level and that is determined by the second electronic device.

In a possible design, when receiving the first target brightness from the second electronic device, the first electronic device may receive the first target brightness from the second electronic device, where the first target brightness is determined by the second electronic device in response to a third operation triggered by the user based on the first display, and the third operation indicates to adjust the display brightness of the second display to the first target brightness.

In a possible design, the first electronic device may further: before the response to the second operation or the third operation triggered by the user based on the first display, determine whether the first display brightness of the first display is less than the second display brightness of the second display; and when the first display brightness is less than the second display brightness, adjust the first display brightness based on second target brightness, where the second target brightness is greater than or equal to the second display brightness.

In a possible design, the first electronic device may further: before the response to the second operation or the third operation triggered by the user based on the first display, obtain a first display brightness range of the first display and a second display brightness range of the second display, and determine a third display brightness range, where the third display brightness range is an overlapping range between the first display brightness range and the second display brightness range; and display a brightness adjustment icon in the first area and/or a brightness adjustment icon in the second area, where the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon includes the second display brightness range and the third display brightness range, the second display brightness range indicates a display brightness range of the second display, and the third display brightness range indicates display brightness ranges of the first area and the second area.

In a possible design, when adjusting the transparency of the masks in the first area and the second area based on the first target brightness, the first electronic device may obtain the second ambient light brightness of the environment in which the second display is located; and adjust the transparency of the masks in the first area and the second area based on the first target brightness and the second ambient light brightness.

In a possible design, when receiving the first target brightness from the second electronic device, the first electronic device may receive the first target brightness from the second electronic device, where the first target brightness is determined by the second electronic device in response to a fourth operation triggered by the user based on the second display, and the fourth operation indicates to adjust the display brightness of the second display to the first target brightness, or the first target brightness is display brightness that is corresponding to the second ambient light brightness and that is determined by the second electronic device based on the second ambient light brightness of the environment in which the second display is located and a first mapping relationship corresponding to the second display, and the first mapping relationship indicates a mapping relationship between ambient light brightness of the environment and display brightness, or the first target brightness is determined by the second electronic device based on a brightness adjustment indication of a first application, and the brightness adjustment indication indicates to adjust the display brightness of the second display to the first target brightness.

In a possible design, when adjusting the transparency of the masks in the first area and the second area based on the first target brightness, the first electronic device may obtain the first ambient light brightness of the environment in which the first display is located and the second ambient light brightness of the environment in which the second display is located; determine, based on the first mapping relationship corresponding to the second display, third display brightness corresponding to the second ambient light brightness and fourth display brightness corresponding to the first ambient light brightness, where the first mapping relationship indicates a mapping relationship between ambient light brightness of the environment and display brightness; determine third target brightness based on the third display brightness, the fourth display brightness, and the first target brightness, where a difference between the third display brightness and the first target brightness is a first difference, a difference between the fourth display brightness and the third target brightness is a second difference, and the first difference is positively correlated with the second difference; and adjust the transparency of the masks in the first area and the second area based on the third target brightness.

For beneficial effects of the fourth aspect and the possible designs of the fourth aspect, refer to descriptions of the beneficial effects of the method according to any one of the third aspect and the possible designs of the third aspect.

According to a fifth aspect, this application further provides an electronic device. The electronic device includes a processor, a memory, and one or more programs. The one or more programs are stored in the memory, the one or more programs include instructions, and when the instructions are executed by the processor, the electronic device is enabled to perform the method according to any one of the second aspect or the possible designs of the second aspect, or perform the method according to any one of the fourth aspect or the possible designs of the fourth aspect.

According to a sixth aspect, this application provides a computer-readable storage medium. The computer-readable storage medium is configured to store a computer program, and when the computer program is run on a computer, the computer is enabled to perform the method according to any one of the second aspect or the possible designs of the second aspect, or perform the method according to any one of the fourth aspect or the possible designs of the fourth aspect.

According to a seventh aspect, this application provides a computer program product, including a computer program. When the computer program is run on a computer, the computer is enabled to perform the method according to any one of the second aspect or the possible designs of the second aspect, or perform the method according to any one of the fourth aspect or the possible designs of the fourth aspect.

### BRIEF DESCRIPTION OF DRAWINGS

FIG. 1a is a diagram of a display according to an embodiment of this application;
FIG. 1b is a diagram of a structure of a brightness adjustment system according to an embodiment of this application;
FIG. 2 is a diagram of a hardware structure of an electronic device according to an embodiment of this application;
FIG. 3 is a diagram of a software structure of an electronic device according to an embodiment of this application;
FIG. 4 is a diagram of a brightness adjustment start interface according to an embodiment of this application;
FIG. 5(1) to FIG. 5(4) are a diagram of a brightness adjustment operation interface according to an embodiment of this application;
FIG. 6(1) and FIG. 6(2) are a diagram of a brightness adjustment icon according to an embodiment of this application;
FIG. 7 is a diagram of a brightness adjustment scenario according to an embodiment of this application;
FIG. 8a(1) to FIG. 8a(4) are a diagram of another brightness adjustment scenario according to an embodiment of this application;
FIG. 8b(1) to FIG. 8b(4) are a diagram of another brightness adjustment scenario according to an embodiment of this application;
FIG. 9 is a diagram of another brightness adjustment operation interface according to an embodiment of this application;
FIG. 10a(1) to FIG. 10a(4) are a diagram of another brightness adjustment scenario according to an embodiment of this application;
FIG. 10b(1) to FIG. 10b(4) are a diagram of another brightness adjustment scenario according to an embodiment of this application;
FIG. 11 is a diagram of a principle of a brightness adjustment implementation according to an embodiment of this application;
FIG. 12 is a diagram of a principle of another brightness adjustment implementation according to an embodiment of this application;
FIG. 13a is a schematic flowchart of a brightness adjustment method according to an embodiment of this application;
FIG. 13b is a schematic flowchart of another brightness adjustment method according to an embodiment of this application; and
FIG. 14 is a diagram of a hardware structure of a first electronic device according to an embodiment of this application.

### DESCRIPTION OF EMBODIMENTS

The following describes some terms in embodiments of this application, to facilitate understanding of a person skilled in the art.
(1) In embodiments of this application, "at least one" includes one or more, and "a plurality of' means two or more. In addition, it should be understood that in descriptions of this specification, words such as "first" and "second" are merely intended for the purpose of differentiated description, and should not be understood as expressing or implying relative importance or a sequence. For example, a first object and a second object do not represent importance degrees of the first object and the second object or a sequence of the first object and the second object, and are merely used for differentiated description. The term "and/or" in embodiments of this application describes only an association relationship and represents that three relationships may exist. For example, A and/or B may represent the following three cases: Only A exists, both A and B exist, and only B exists. In addition, the character "/" in this specification usually indicates an "or" relationship between the associated objects.

In the descriptions of embodiments of this application, it should be noted that terms "installation" and "connection" should be understood in a broad sense unless there is a clear stipulation and limitation. For example, "connection" may be a detachable connection, a non-detachable connection, a direct connection, or an indirect connection through an intermediate medium. The orientation terms mentioned in embodiments of this application, for example, "up", "down", "left", "right", "inside", and "outside", are merely directions based on the accompanying drawings. Therefore, the orientation terms are used to better and more clearly describe and understand embodiments of this application, instead of indicating or implying that a specified apparatus or element should have a specific orientation or be constructed and operated in a specific orientation. Therefore, this cannot be understood as a limitation on embodiments of this application. "A plurality of" means at least two.

Reference to "an embodiment", "some embodiments", or the like described in this specification means that specific features, structures, or characteristics described with reference to the embodiment are included in one or more embodiments of this specification. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

(2) Brightness means that a ratio of light intensity of a light source to an area of the light source is defined as unit brightness of the light source, that is, luminous intensity in a unit projection area. A unit of brightness is nit (nit) or candela/square meter (cd/m²). 1 nit = 1 cd/m². Brightness is generally classified into display brightness and perceived brightness. The display brightness is actual objective brightness, and the perceived brightness is subjective brightness perceived by human eyes. The actual objective brightness and the subjective brightness perceived by human eyes are not completely the same, but have a specific correspondence. A range of brightness that can be perceived by human eyes (which is referred to as a visual range) is very wide, from several nit per thousand to millions of nit. A reason why the range is very wide is regulating effect of pupils and photosensitive cells. The pupil regulates its size based on intensity of external light, so that luminous flux emitted onto the retina is as moderate as possible. In cases of strong light and weak light, cone cells and rod cells act respectively. Sensitivity of the rod cells is 10000 times that of the cone cells. Therefore, with respect to different ambient light brightness, human eyes perceive different relative subjective brightness for the same actual objective brightness. For example, for a same electric lamp, human eyes have different perceived brightness for display brightness of the electric lamp in the daytime and at night. In the daytime, perceived brightness for the electric lamp is low, and at night, perceived brightness for the electric lamp is high.

In addition, display brightness of a display is usually measured when the display displays an all-white image. In other words, the display can achieve ideal display brightness only when displaying an all-white image, and cannot achieve ideal display brightness when displaying an image of another color (for example, an all-gray image). That is, display content of the display affects actual display brightness of the display. For example, the ideal display brightness of the display is 100 nit. When the display displays an all-white image, the actual display brightness of the display is 100 nit. When the display displays an all-black image, the actual display brightness of the display is 20 nit.

(3) Brightness adjustment includes direct brightness adjustment and indirect brightness adjustment. The direct brightness adjustment may be that a user directly adjusts brightness of a display of an electronic device. The indirect brightness adjustment may be using a display of an electronic device to adjust brightness of a display of another electronic device, that is, adjusting brightness across devices, or may be using a display of an electronic device to adjust brightness of another display of the electronic device, that is, adjusting brightness across displays of a same device.

(4) Light-emitting diodes (light-emitting diode, LED) include an organic light-emitting diode (organic LED, OLED) and a micro light-emitting diode (micro LED). Both the organic light-emitting diode and the micro light-emitting diode actively emit light by a single pixel. A difference is that the organic light-emitting diode is driven by a current to emit light through an organic thin film, and the micro light-emitting diode is independently driven to light up. Theoretically, both the organic light-emitting diode and the micro light-emitting diode can control brightness of a single pixel.

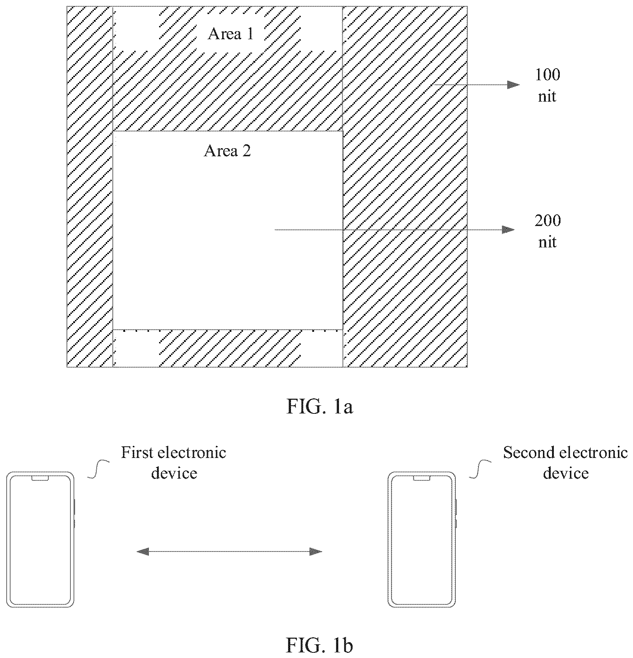

When a display of an electronic device is an organic light-emitting diode display or a micro light-emitting diode display, brightness of the display may be set based on a pixel coordinate area of the display, that is, brightness of different pixel coordinate areas of the display may be different. For example, FIG. 1a is a diagram of a display according to an embodiment of this application. As shown in FIG. 1a, the display is an organic light-emitting diode display or a micro light-emitting diode display. The display includes an area 1 and an area 2. The area 1 may be an area formed by splicing four rectangular areas, and the area 2 is one rectangular area. Each area has a respective coordinate range. Corresponding brightness may be respectively set for these areas. For example, brightness of the area 1 is 200 nit, and brightness of the area 2 is 100 nit.

When adjusting brightness across devices or adjusting brightness across displays of a same device, a user can only imagine brightness adjustment effect of a controlled display according to experience, but cannot intuitively perceive the brightness adjustment effect of the controlled display on a controlling display. Consequently, brightness adjustment efficiency of the display is low, and the adjustment effect is poor.

Based on the foregoing problem, embodiments of this application provide a brightness adjustment system, to improve brightness adjustment efficiency and adjustment effect of a display. FIG. 1b is a diagram of a structure of a brightness adjustment system according to an embodiment of this application. As shown in FIG. 1b, the brightness adjustment system may include a first electronic device and a second electronic device.

It should be understood that, for ease of understanding, FIG. 1b shows only an example of a brightness adjustment system, but this should not constitute any limitation on this application. The brightness adjustment system may further include more first electronic devices, or may include more second electronic devices. Second electronic devices interacting with different first electronic devices may be a same second electronic device, or may be different second electronic devices. Quantities of second electronic devices interacting with different first electronic devices may be the same or may be different. The first electronic device and the second electronic device may be different electronic devices, or may be a same electronic device. This is not limited in embodiments of this application. When the first electronic device and the second electronic device are a same electronic device, the first electronic device and the second electronic device may be different displays on a same electronic device.

In embodiments of this application, the first electronic device may display two areas on a first display of the first electronic device. The two areas each are covered with a mask. Display brightness of a first area after covering with the mask is equal to display brightness of the first display before covering with the mask, or perceived brightness of a first area after covering with the mask is equal to perceived brightness of the first display before covering with the mask. Display brightness of a second area after covering with the mask is equal to display brightness of a second display, or perceived brightness of a second area after covering with the mask is equal to perceived brightness of a second display. In this way, when adjusting the display brightness of the second display by using the first display, a user can intuitively perceive brightness adjustment effect of the second display based on brightness adjustment effect of the second area displayed on the first display, thereby improving brightness adjustment efficiency and adjustment effect of the display.

It should be understood that the first electronic device and the second electronic device may be a portable device having a display, such as a mobile phone, a tablet computer, a wearable device (for example, a watch) with a wireless communication function, an in-vehicle terminal device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the first electronic device and the second electronic device may be a smart home device having a display (for example, a smart television), a smart vehicle, a smart robot, a workshop device, a wireless terminal in self-driving (Self-Driving), a wireless terminal in remote surgery (Remote Medical Surgery), a wireless terminal in a smart grid (Smart Grid), a wireless terminal in transportation safety (Transportation Safety), a wireless terminal in a smart city (Smart City), a wireless terminal in a smart home (Smart Home), a flight device (for example, a smart robot, a hot air balloon, an uncrewed aerial vehicle, or an airplane), or the like.

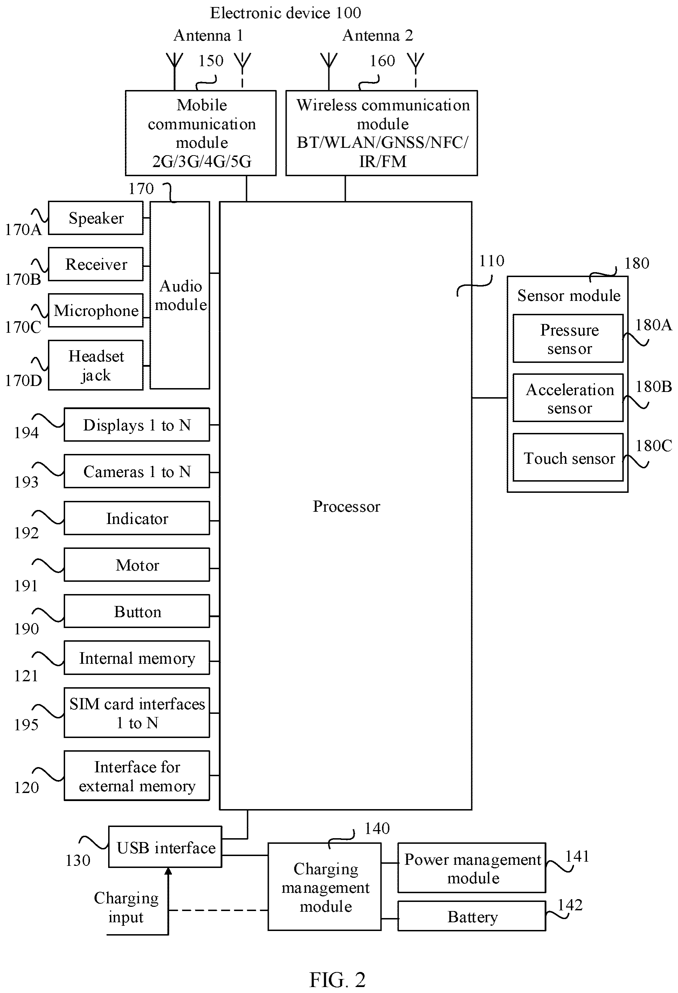

FIG. 2 is a diagram of a hardware structure of an electronic device according to an embodiment of this application. As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution. A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved. The brightness adjustment method in embodiments of this application may be performed by the processor 110 by controlling or invoking another component, for example, invoking a processing program of embodiments of this application stored in the internal memory 121, or invoking, by using the interface 120 for external memory, a processing program of embodiments of this application stored in a third-party device, so that a first electronic device may display two areas on a first display of the first electronic device. The two areas each are covered with a mask. Display brightness of a first area after covering with the mask is equal to display brightness of the first display before covering with the mask, or perceived brightness of a first area after covering with the mask is equal to perceived brightness of the first display before covering with the mask. Display brightness of a second area after covering with the mask is equal to display brightness of a second display, or perceived brightness of a second area after covering with the mask is equal to perceived brightness of a second display. In this way, when adjusting the display brightness of the second display by using the first display, a user can intuitively perceive brightness adjustment effect of the second display based on brightness adjustment effect of the second area displayed on the first display, thereby improving brightness adjustment efficiency and adjustment effect of the display.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, software code of at least one application, and the like. The data storage area may store data (for example, a shot image or a recorded video) and the like generated during use of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The interface 120 for external memory may be configured to connect to an external memory card, such as a micro SD card, to extend a storage capability of the electronic device. The external memory card communicates with the processor 110 through the interface 120 for external memory, to implement a data storage function. For example, files such as pictures or videos are stored in the external memory card.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device. The charging management module 140 is configured to receive charging input from a charger. The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The display 194 is configured to display a display interface of an application, for example, display a display page of an application installed on the electronic device 100. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diodes, QLED), or the like. In some embodiments, the electronic device 100 may include one or N displays 194, where N is a positive integer greater than 1.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The electronic device 100 may implement an audio function, such as music playing and recording, by using the audio module 170, the speaker 170A, the receiver 170B, the microphone 170C, the headset jack 170D, the application processor, and the like.

The sensor module 180 may include a pressure sensor 180A, an acceleration sensor 180B, a touch sensor 180C, and the like.

The pressure sensor 180A is configured to sense a pressure signal, and may convert the pressure signal into an electrical signal. In some embodiments, the pressure sensor 180A may be disposed on the display 194.

The touch sensor 180C is also referred to as a "touch panel". The touch sensor 180C may be disposed on the display 194, and the touch sensor 180C and the display 194 form a touchscreen, which is also referred to as a "touch screen". The touch sensor 180C is configured to detect a touch operation performed on or near the touch sensor. The touch sensor may transfer the detected touch operation to the application processor to determine a type of a touch event. Visual output related to the touch operation may be provided by using the display 194. In some other embodiments, the touch sensor 180C may alternatively be disposed on a surface of the electronic device 100 at a location different from that of the display 194.

The button 190 includes a power button, a volume button, and the like. The button 190 may be a mechanical button, or may be a touch button. The electronic device 100 may receive button input, and generate button signal input related to user settings and function control of the electronic device 100. The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. A touch vibration feedback effect may be further customized. The indicator 192 may be an indicator light, and may indicate a charging status or a power change, or may indicate a message, a missed call, a notification, or the like. The SIM card interface 195 is configured to connect to a SIM card. The SIM card may be inserted into the SIM card interface 195 or pulled out of the SIM card interface 195, to implement contact with or separation from the electronic device 100.

It may be understood that components shown in FIG. 2 do not constitute a specific limitation on the electronic device 100. The electronic device 100 may further include more or fewer components than those shown in the figure, or some components may be combined, or some components may be split, or there may be a different component arrangement. In addition, a combination/connection relationship between the components in FIG. 2 may also be adjusted and modified.

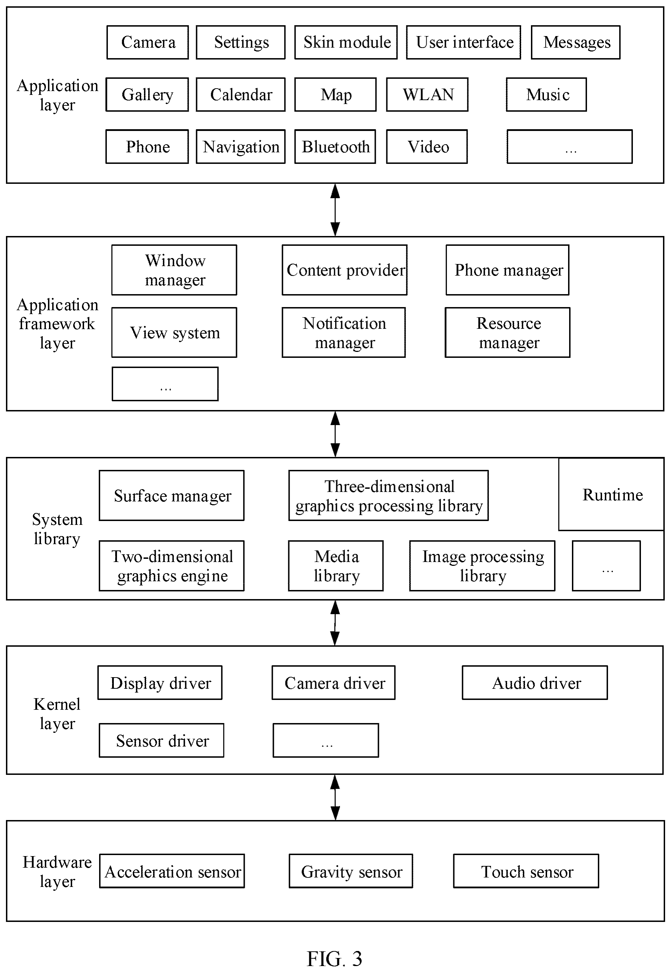

FIG. 3 is a diagram of a software structure of an electronic device according to an embodiment of this application. As shown in FIG. 3, the software structure of the electronic device may be a layered architecture. For example, software may be divided into several layers, and each layer has a clear role and task. The layers communicate with each other through a software interface. In some embodiments, an operating system is divided into four layers: an application layer, an application framework (framework, FWK) layer, a runtime (runtime) and system library, and a kernel layer from top to bottom.

The application layer may include a series of application packages (application package). As shown in FIG. 3, the application layer may include Camera, Settings, a skin module, a user interface (user interface, UI), a third-party application, and the like. The third-party application may include Gallery, Calendar, Phones, Map, Navigation, WLAN, Bluetooth, Music, Video, Messages, and the like.

The application framework layer provides an application programming interface (application programming interface, API) and a programming framework for applications at the application layer. The application framework layer may include some predefined functions. As shown in FIG. 3, the application framework layer may include a window manager, a content provider, a view system, a phone manager, a resource manager, and a notification manager.

The window manager is configured to manage window programs. The window manager may obtain a display size, determine whether there is a status bar, lock a screen, take a screenshot, and the like. The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The runtime includes a core library and a virtual machine. The runtime is responsible for scheduling and management of the operating system.

The core library includes two parts: a function that needs to be invoked in Java language, and a core library of the operating system. The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

Based on the brightness adjustment system shown in FIG. 1b, embodiments of this application further provide a brightness adjustment method. The following further describes, with reference to the hardware architecture of the electronic device shown in FIG. 2 and the software architecture of the electronic device shown in FIG. 3, the brightness adjustment method provided in embodiments of this application.

An execution process of the brightness adjustment method provided in embodiments of this application includes at least two phases: brightness adjustment start and brightness adjustment implementation. The following describes methods in the phases in detail.

### 1. Brightness adjustment start

In embodiments of this application, a user may log in to a brightness adjustment application in a first electronic device. The brightness adjustment application may be a system application in the first electronic device, or may be a third-party application in the first electronic device. This is not limited in embodiments of this application. For example, the user may enter login information on a login interface of the brightness adjustment application in the first electronic device, to log in to the brightness adjustment application of the first electronic device, or the user may log in to the brightness adjustment application in the first electronic device by triggering "one-click login using a mobile number".

Alternatively, the user may enable a wireless communication function of the first electronic device, for example, a wireless fidelity (wireless fidelity, Wi-Fi) function, a Bluetooth (Bluetooth, BT) function, or a near field communication (near field communication, NFC) function. For example, the user may enable the Bluetooth function of the first electronic device by selecting a Bluetooth enabling icon on a Bluetooth setting interface of the first electronic device. When the user enables the Bluetooth function of the first electronic device, the first electronic device may display a list of available electronic devices on a display, and the like. The list of available electronic devices includes at least one electronic device identifier. The electronic device identifier is used to identify a nearby electronic device whose Bluetooth function is enabled. The electronic device identifier may include one or more of an electronic device name, an electronic device type, an electronic device media access control (media access control address, MAC) address, or the like. The electronic device identifier may be presented to the user in the list of available devices in a form of a graphic, a text, or the like. The electronic device name may be an electronic device model, or may be set by the user. This is not limited in embodiments of this application. The user may select a second electronic device in the list of available electronic devices. When the first electronic device detects an operation of selecting the second electronic device by the user, the first electronic device may establish a Bluetooth connection to the second electronic device in response to the operation.

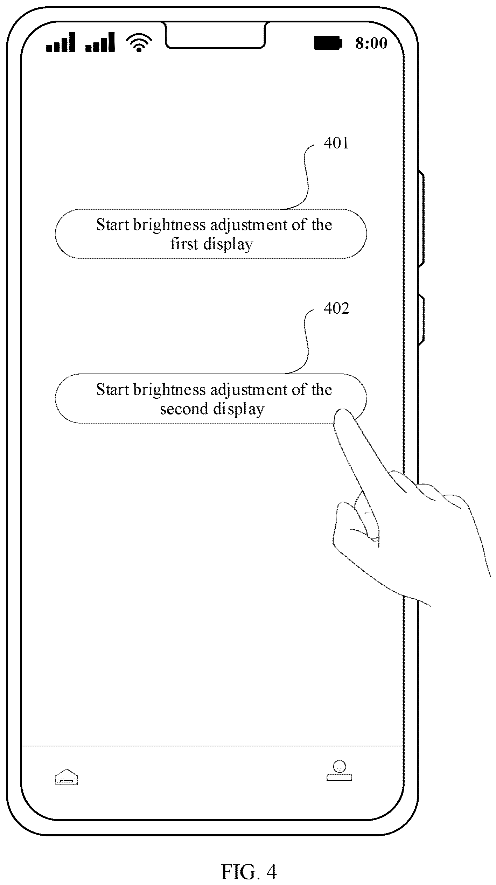

When the user logs in to the brightness adjustment application of the first electronic device, or when the first electronic device establishes a Bluetooth connection to the second electronic device, the first electronic device may display, on a first display of the first electronic device, a brightness adjustment start interface shown in FIG. 4. As shown in FIG. 4, the interface may display a "start brightness adjustment of the first display" icon 401 and a "start brightness adjustment of the second display" icon 402. The user may start adjusting display brightness of the first display of the first electronic device by selecting the "start brightness adjustment of the first display" icon 401, or start adjusting display brightness of a second display of the second electronic device by selecting the "start brightness adjustment of the second display" icon 402.

It should be understood that the first electronic device and the second electronic device may be different electronic devices, or may be a same electronic device. That is, when adjusting display brightness of the second display (that is, a controlled display) by using the first display (that is, a controlling display), the user may adjust display brightness of a display of an electronic device by using a display of another electronic device, that is, adjust display brightness of a display across devices; or may adjust display brightness of a display of an electronic device by using another display of the electronic device, that is, adjust display brightness of a display across displays on a same device. This is not limited in embodiments of this application. For example, when the first electronic device and the second electronic device are different electronic devices, the first electronic device may be an in-vehicle terminal device, the first display may be a central control display, a front-passenger display, or a rear-row display of the in-vehicle terminal device, the second electronic device may be a tablet computer, and the second display may be a display of the tablet computer. Alternatively, when the first electronic device and the second electronic device are a same electronic device, the first electronic device and the second electronic device may be a same in-vehicle terminal device, the first display may be a central control display of the in-vehicle terminal device, and the second display may be a front-passenger display or a rear-row display of the in-vehicle terminal device. In addition, when the second electronic device and the first electronic device are the same electronic device, the first display and the second display may be managed by a same chip, that is, the electronic device is a one-chip multi-screen device; or the first display and the second display may be managed by different chips, that is, the electronic device is a multi-chip multi-screen device. This is not limited in embodiments of this application.

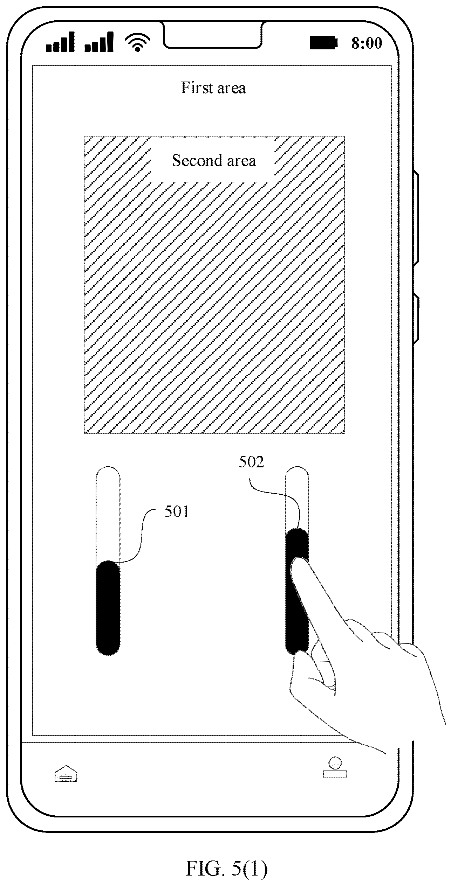

When the first electronic device detects that the user selects the "start brightness adjustment of the second display" icon 402 to start an operation (for example, referred to as a first operation) of adjusting display brightness of the second display of the second electronic device, in response to the operation, the first electronic device may display a brightness adjustment operation interface shown in FIG. 5(1) to FIG. 5(4) on the first display. The interface may display a first area and a second area, and the first area and the second area each are covered with a mask. That the first electronic device covers each of the first area and the second area with the mask is equivalent to superimposing an all-black image whose transparency can be adjusted on an image originally displayed in each of the first area and the second area. That is, the first electronic device may adjust actual display brightness of the first area or the second area by adjusting transparency of the mask in the first area or the second area. For example, ideal display brightness of the first area (that is, display brightness of the first display that is set by the first electronic device) is 100 nit, and the first electronic device adjusts the transparency of the mask in the first area to 100%. This is equivalent to that the first electronic device does not superimpose an all-black image on the image originally displayed in the first area, and display content of the first area is not changed, so that actual display brightness of the first area is equal to the ideal display brightness of the first area. Alternatively, the first electronic device adjusts the transparency of the mask in the first area to 0%. This is equivalent to that the first electronic device superimposes an all-black image on the image originally displayed in the first area, and display content of the first area is changed, so that actual display brightness of the first area is less than the ideal display brightness of the first area.

It should be understood that, if the first display is an organic light-emitting diode display or a micro light-emitting diode display, the first electronic device may not need to cover each of the first area and the second area with the mask to make display brightness of the first area different from display brightness of the second area by adjusting the transparency of the mask, but may directly adjust the display brightness of the first area and the display brightness of the second area to make the display brightness of the first area different from the display brightness of the second area. For example, when the first display is not an organic light-emitting diode display or a micro light-emitting diode display, the first electronic device may set display brightness of the first display to 100 nit; and the first electronic device may adjust the transparency of the mask in the first area to 100%, so that display brightness of the first area is equal to the display brightness of the first display, that is, 100 nit; and may adjust the transparency of the mask in the second area to 80%, so that display brightness of the second area is less than the display brightness of the first display, that is 80 nit. When the first display is an organic light-emitting diode display or a micro light-emitting diode display, the first electronic device may directly set display brightness of the first area on the first display to 100 nit, and directly set display brightness of the second area on the first display to 80 nit. For ease of description, the following uses an example in which the first electronic device covers each of the first area and the second area with a mask.

In a possible implementation, the first electronic device may set display brightness of the first area after covering with the mask to be equal to display brightness (for example, referred to as first display brightness) of the first display before covering with the mask (that is, before the first electronic device starts adjusting display brightness of the second display by using the first display), or set perceived brightness of the first area after covering with the mask to be equal to perceived brightness (for example, referred to as first perceived brightness) of the first display before covering with the mask. The display brightness of the first area after covering with the mask is related to transparency of the mask in the first area and the first display brightness. For example, when the transparency of the mask in the first area remains unchanged, higher first display brightness indicates higher display brightness of the first area after covering with the mask; or when the first display brightness remains unchanged, higher transparency of the mask in the first area indicates higher display brightness of the first area after covering with the mask. The perceived brightness of the first area after covering with the mask is related to the transparency of the mask in the first area and the first perceived brightness, and the first perceived brightness is related to the first display brightness and ambient light brightness (for example, referred to as first ambient light brightness) of an environment in which the first display is located. For example, when the transparency of the mask in the first area and the first display brightness remain unchanged, higher first ambient light brightness indicates lower display brightness of the first area after covering with the mask; or when the transparency of the mask in the first area and the first ambient light brightness remain unchanged, higher first display brightness indicates higher display brightness of the first area after covering with the mask; or when the first display brightness and the first ambient light brightness remain unchanged, higher transparency of the mask in the first area indicates higher display brightness of the first area after covering with the mask.

The first electronic device may further set the display brightness of the second area after covering with the mask to be equal to the display brightness (for example, referred to as second display brightness) of the second display, or set the perceived brightness of the second area after covering with the mask to be equal to the perceived brightness (for example, referred to as second perceived brightness) of the second display. The display brightness of the second area after covering with the mask is related to transparency of the mask in the second area and the first display brightness. For example, when the transparency of the mask in the second area remains unchanged, higher first display brightness indicates higher display brightness of the second area after covering with the mask; or when the first display brightness remains unchanged, higher transparency of the mask in the second area indicates higher display brightness of the second area after covering with the mask. The perceived brightness of the second area after covering with the mask is related to the transparency of the mask in the second area and the first perceived brightness, and the first perceived brightness is related to the first display brightness and the first ambient light brightness. For example, when the transparency of the mask in the second area and the first display brightness remain unchanged, higher first ambient light brightness indicates lower display brightness of the second area after covering with the mask; or when the transparency of the mask in the second area and the first ambient light brightness remain unchanged, higher first display brightness indicates higher display brightness of the second area after covering with the mask; or when the first display brightness and the first ambient light brightness remain unchanged, higher transparency of the mask in the second area indicates higher display brightness of the second area after covering with the mask. The second perceived brightness is related to the second display brightness and ambient light brightness (for example, referred to as second ambient light brightness) of an environment in which the second display is located. For example, when the second display brightness remains unchanged, higher second ambient light brightness indicates lower second perceived brightness; or when the second ambient light brightness remains unchanged, higher second display brightness indicates higher second perceived brightness.

That is, the first electronic device displays, on the first display, the first area and the second area that each are covered with the mask; the display brightness of the first area after covering with the mask is equal to the display brightness of the first display before covering with the mask, or the perceived brightness of the first area after covering with the mask is equal to the perceived brightness of the first display before covering with the mask; and the display brightness of the second area after covering with the mask is equal to the display brightness of the second display, or the perceived brightness of the second area after covering with the mask is equal to the perceived brightness of the second display, so that when adjusting the display brightness of the second display by using the first display, the user can intuitively perceive the display brightness or the perceived brightness of the second display based on the display brightness or the perceived brightness of the second area, that is, intuitively perceive brightness adjustment effect of the second display based on brightness adjustment effect of the second area, thereby improving brightness adjustment efficiency and adjustment effect of the display.

In another possible implementation, the first electronic device may set display brightness of both the first area and the second area after covering with the mask to be equal to the second display brightness, or set perceived brightness of both the first area and the second area after covering with the mask to be equal to the second perceived brightness. The display brightness of the first area after covering with the mask is related to the transparency of the mask in the first area and the first display brightness, and the display brightness of the second area after covering with the mask is related to the transparency of the mask in the second area and the first display brightness. For example, when the transparency of the mask in the first area or the second area remains unchanged, higher first display brightness indicates higher display brightness of the first area or the second area after covering with the mask; or when the first display brightness remains unchanged, higher transparency of the mask in the first area or the second area indicates higher display brightness of the first area or the second area after covering with the mask. The perceived brightness of the first area after covering with the mask is related to the transparency of the mask in the first area and the first perceived brightness, the perceived brightness of the second area after covering with the mask is related to the transparency of the mask in the second area and the first perceived brightness, and the first perceived brightness is related to the first display brightness and the first ambient light brightness. For example, when the transparency of the mask in the first area or the second area and the first display brightness remain unchanged, higher first ambient light brightness indicates lower display brightness of the first area or the second area after covering with the mask; or when the transparency of the mask in the first area or the second area and the first ambient light brightness remain unchanged, higher first display brightness indicates higher display brightness of the first area or the second area after covering with the mask; or when the first display brightness and the first ambient light brightness remain unchanged, higher transparency of the mask in the first area or the second area indicates higher display brightness of the first area or the second area after covering with the mask. The second perceived brightness is related to the second display brightness and the second ambient light brightness. For example, when the second display brightness remains unchanged, higher second ambient light brightness indicates lower second perceived brightness; or when the second ambient light brightness remains unchanged, higher second display brightness indicates higher second perceived brightness.

That is, the first electronic device displays, on the first display, the first area and the second area that each are covered with the mask; and the display brightness of the first area and the second area after covering with the mask is equal to the display brightness of the second display, or the perceived brightness of the first area and the second area after covering with the mask is equal to the perceived brightness of the second display, so that when adjusting the display brightness of the second display by using the first display, the user can intuitively perceive the display brightness or the perceived brightness of the second display based on the display brightness or the perceived brightness of the first area and the second area, that is, intuitively perceive brightness adjustment effect of the second display based on brightness adjustment effect of the first area and the second area, thereby improving brightness adjustment efficiency and adjustment effect of the display.

In addition, the first electronic device may further display, in the first area and/or the second area, a brightness adjustment icon used by the user to adjust the display brightness of the second display. A brightness adjustment icon displayed in the first area may be a control of the first display, and a brightness adjustment icon displayed in the second area may be a control of the first display or the second display.

As shown in FIG. 5(1), a "first display brightness adjustment" icon 501 and a "second display brightness adjustment" icon 502 may be displayed in the first area. Both the "first display brightness adjustment" icon 501 and the "second display brightness adjustment" icon 502 may be controls of the first display. The user may adjust the display brightness of the first display by selecting the "first display brightness adjustment" icon 501 in the first area, and adjust the display brightness of the second display by selecting the "second display brightness adjustment" icon 502 in the first area. For example, the user may adjust the display brightness of the first display by sliding up or down a scroll bar corresponding to the "first display brightness adjustment" icon 501, and adjust the display brightness of the second display by sliding up or down a scroll bar corresponding to the "second display brightness adjustment" icon 502.

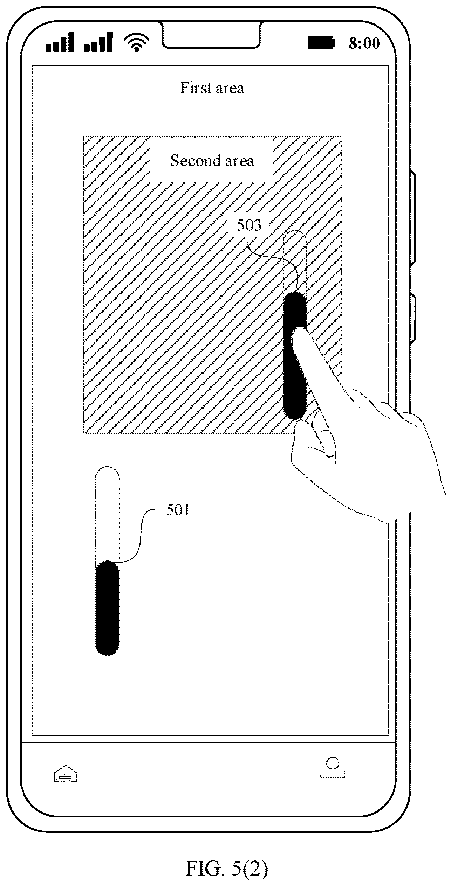

As shown in FIG. 5(2), a "first display brightness adjustment" icon 501 may be displayed in the first area, and a "second display brightness adjustment" icon 503 may be displayed in the second area. The "first display brightness adjustment" icon 501 may be a control of the first display, and the "second display brightness adjustment" icon 503 may be a control of the first display, or may be a control of the second display that is projected onto the first display. That is, when the user operates the control, the brightness of the second display may be adjusted through projection-based reverse control. The user may adjust the display brightness of the first display by selecting the "first display brightness adjustment" icon 501 in the first area, and adjust the display brightness of the second display by selecting the "second display brightness adjustment" icon 503 in the second area.

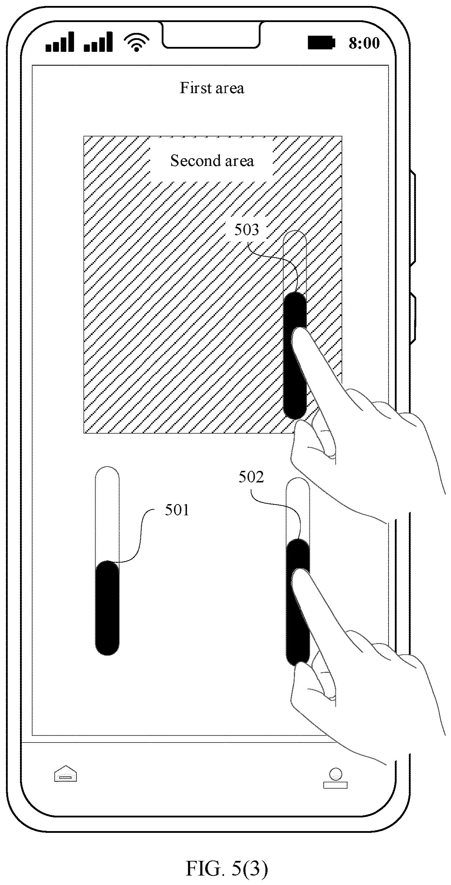

As shown in FIG. 5(3), a "first display brightness adjustment" icon 501 and a "second display brightness adjustment" icon 502 may be displayed in the first area, and a "second display brightness adjustment" icon 503 may be displayed in the second area. Both the "first display brightness adjustment" icon 501 and the "second display brightness adjustment" icon 502 may be controls of the first display, and the "second display brightness adjustment" icon 503 may be a control of the first display, or may be a control of the second display that is projected onto the first display. That is, when the user operates the control, the brightness of the second display may be adjusted through projection-based reverse control. The user may adjust the display brightness of the first display by selecting the "first display brightness adjustment" icon 501 in the first area, and adjust the display brightness of the second display by selecting the "second display brightness adjustment" icon 502 in the first area or the "second display brightness adjustment" icon 503 in the second area.

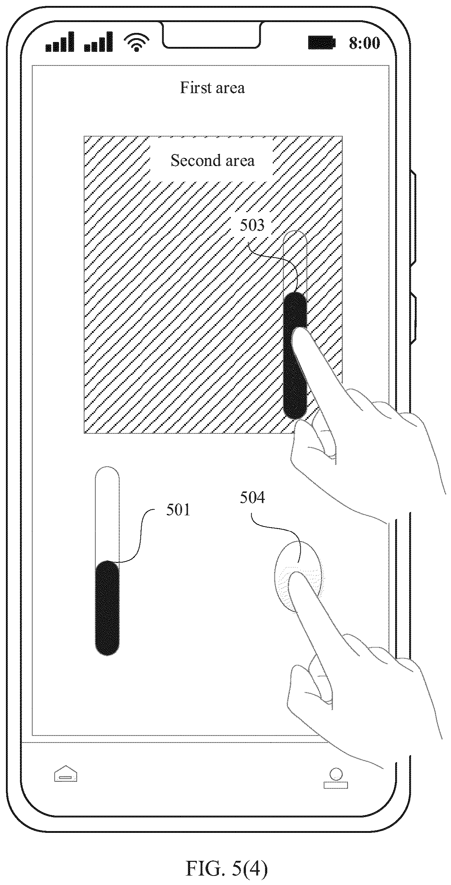

As shown in FIG. 5(4), a "first display brightness adjustment" icon 501 and a "trigger second display brightness adjustment" icon 504 may be displayed in the first area. The "first display brightness adjustment" icon 501 may be a control of the first display. The user may adjust the display brightness of the first display by selecting the "first display brightness adjustment" icon 501 in the first area, and trigger a "second display brightness adjustment" icon 503 to be displayed in the second area by selecting the "trigger second display brightness adjustment" icon 504 in the first area. The "second display brightness adjustment" icon 503 may be a control of the first display, or may be a control of the second display that is projected onto the first display. That is, when the user operates the control, the brightness of the second display may be adjusted through projection-based reverse control. The user may adjust the display brightness of the second display by selecting the "second display brightness adjustment" icon 503 in the second area.

During specific implementation, when the first electronic device detects an operation of selecting the "start brightness adjustment of the second display" icon 402 by the user, in response to the operation, the first electronic device may obtain a display brightness range (for example, referred to as a first display brightness range) of the first display, a display brightness range (for example, referred to as a second display brightness range) of the second display, the first display brightness, and the second display brightness. In addition, after the first electronic device obtains the second display brightness, the second electronic device may notify the first electronic device when the second display brightness changes. The first electronic device may determine a third display brightness range based on the first display brightness range and the second display brightness range, where the third display brightness range is an overlapping range of the first display brightness range and the second display brightness range. The first electronic device may use the first display brightness range as a brightness adjustment range of the "first display brightness adjustment" icon 501 displayed in the first area, and use the second display brightness range as a brightness adjustment range of the "second display brightness adjustment" icon 502 and the "second display brightness adjustment" icon 503 displayed in the first area, and a brightness adjustment range of the "second display brightness adjustment" icon 503 displayed in the second area. Optionally, the first electronic device may mark the third display brightness range on the "second display brightness adjustment" icon 502 and the "second display brightness adjustment" icon 503, to prompt the user that a display brightness range of the second display is the second display brightness range, and a display brightness range of the second area on the first display is the third display brightness range, or display brightness ranges of the first area and the second area on the first display are the third display brightness range.

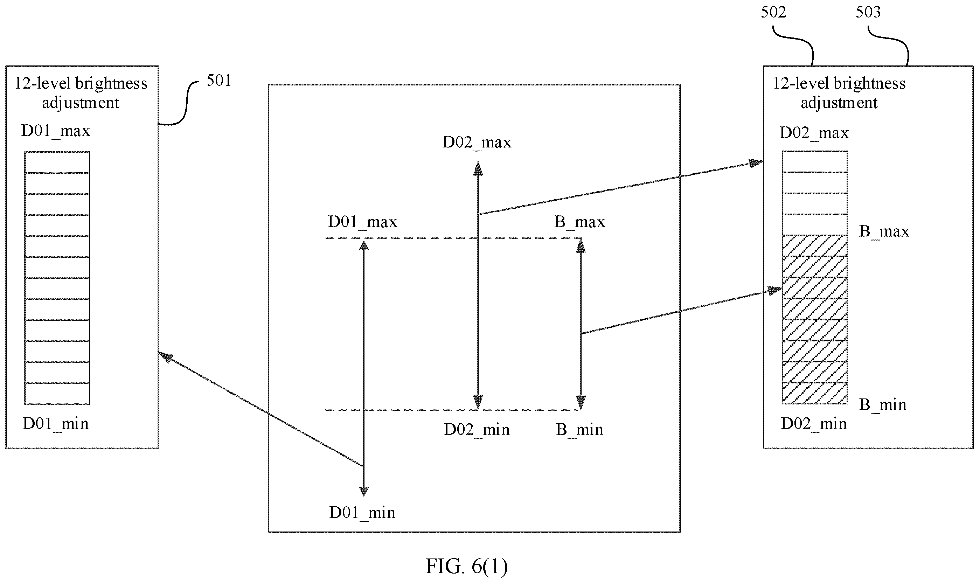

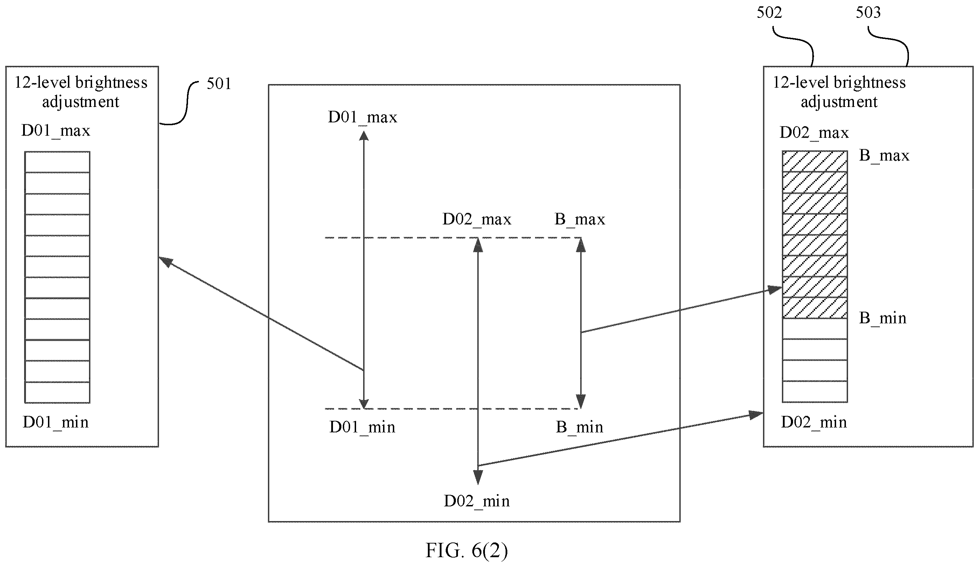

For example, FIG. 6(1) and FIG. 6(2) are a diagram of a brightness adjustment icon according to an embodiment of this application. Display brightness ranges of a first display (Display01, D01) and a second display (Display02, D02) are respectively (D01_min, D01_max) and (D02_min, D02_max), and an overlapping range between the display brightness range of the first display and the display brightness range (Brightness, B) of the second display is (B_min, B_max), where a unit is nit. For example, as shown in FIG. 6(1), when D01_min is less than D02_min, and D01_max is less than D02_max, B_min is equal to D02_min, and B_max is equal to D01_max; or as shown in FIG. 6(2), when D01_min is greater than D02_min, and D01_max is greater than D02_max, B_min is equal to D01_min, and B_max is equal to D02_max.

The first electronic device may use the display brightness range (D01_min, D01_max) of the first display as a brightness adjustment range of an icon that is in the first area on the first display and that is used to adjust display brightness of the second display, that is, the brightness adjustment range of the "first display brightness adjustment" icon 501. The first electronic device may use the display brightness range (D02_min, D02_max) of the second display as a brightness adjustment range of icons that are in the first area and the second area on the first display and that are used to adjust display brightness of the second display, that is, the brightness adjustment range of the "second display brightness adjustment" icon 502 and the "second display brightness adjustment" icon 503.

The first electronic device may further divide the brightness adjustment range (D01_min, D01_max) of the "first display brightness adjustment" icon 501, and the brightness adjustment range (D02_ min, D02_max) of the "second display brightness adjustment" icon 502 and the "second display brightness adjustment" icon 503 into a plurality of brightness adjustment levels. For example, as shown in FIG. 6(1) and FIG. 6(2), there are 12 levels, and each level corresponds to a specific brightness value. When the level is sufficiently low, it may be considered that stepless adjustment is performed.

The first electronic device may further mark the overlapping range (B_min, B_max) between the brightness adjustment range (D02_min, D02_max) of the "second display brightness adjustment" icon 502 and the "second display brightness adjustment" icon 503 and the brightness adjustment range (D01_min, D01_max) of the "first display brightness adjustment" icon 501 on the "second display brightness adjustment" icon 502 and the "second display brightness adjustment" icon 503, to remind the user that the display brightness range of the second display is (D02_min, D02_max), and the display brightness range of the second area on the first display is (B_min, B_max). For example, as shown in FIG. 6(1), the minimum value B_min of the display brightness range of the second area is equal to the minimum value D02_min of the display brightness range of the second display, but the maximum value B_max of the display brightness range of the second area is equal to the maximum value D01_max of the display brightness range of the first display, and is less than the maximum value D02_max of the display brightness range of the second display. Therefore, when a user on a first display side or a user on a second display side adjusts the display brightness of the second display to brightness 1 and the brightness 1 is greater than B_max, the user on the first display side may know that the display brightness of the second area on the first display cannot be adjusted to the brightness 1, but can be adjusted to only B_max. That is, the user may learn, by using the marking information, that the display brightness of the second area on the first display is less than the display brightness of the second display in this case. Alternatively, as shown in FIG. 6(2), the maximum value B_max of the display brightness range of the second area is equal to the maximum value D02_max of the display brightness range of the second display, but the minimum value B_min of the display brightness range of the second area is equal to the minimum value D01_min of the display brightness range of the first display, and is greater than the minimum value D02_min of the display brightness range of the second display. Therefore, when a user on a first display side or a user on a second display side adjusts the display brightness of the second display to brightness 2 and the brightness 2 is less than B_min, the user on the first display side may know that the display brightness of the second area on the first display cannot be adjusted to the brightness 2, but can be adjusted to only B_min. That is, the user may learn, by using the marking information, that the display brightness of the second area on the first display is greater than the display brightness of the second display in this case.

During specific implementation, when obtaining the first display brightness range, the second display brightness range, the first display brightness, and the second display brightness, the first electronic device may further determine whether the first display and the second display have an ambient light sensor, or whether a third electronic device and a fourth electronic device have an ambient light sensor. The third electronic device may be an electronic device near the first display, the third electronic device is in a connected state (for example, a near field connected state) with the first electronic device, the fourth electronic device may be an electronic device near the second display, and the fourth electronic device is in a connected state with the first electronic device. For example, when the first display is a central control display of an in-vehicle terminal device, a mobile phone of a user in a front-passenger seat of a vehicle may be used as the third electronic device, to obtain, by using an ambient light sensor in the mobile phone of the user in the front-passenger seat of the vehicle, ambient light brightness of an environment in which the central control display of the in-vehicle terminal device is located.

If the first display and the second display have an ambient light sensor, the first electronic device may further obtain the first ambient light brightness by using the ambient light sensor in the first display, and obtain the second ambient light brightness by using the ambient light sensor in the second display. In addition, after the first electronic device obtains the second ambient light brightness, the second electronic device may notify the first electronic device when the second ambient light brightness changes. In this case, the first electronic device may determine the first perceived brightness based on the first display brightness and the first ambient light brightness, and determine the second perceived brightness based on the second display brightness and the second ambient light brightness. The first electronic device may set the transparency of the mask in the first area based on the first perceived brightness, and set the transparency of the mask in the second area based on the second perceived brightness, so that the perceived brightness of the first area after covering with the mask is equal to the first perceived brightness, and the perceived brightness of the second area after covering with the mask is equal to the second perceived brightness. Alternatively, the first electronic device may set the transparency of the masks in the first area and the second area based on the second perceived brightness, so that the perceived brightness of the first area and the second area after covering with the mask is equal to the second perceived brightness.

If the first display or the second display does not have an ambient light sensor, the first electronic device may further obtain the first ambient light brightness by using the ambient light sensor in the third electronic device and obtain the second ambient light brightness by using the second display when the first display does not have an ambient light sensor; or obtain the first ambient light brightness by using the first display and obtain the second ambient light brightness by using the ambient light sensor in the fourth electronic device when the second display does not have an ambient light sensor. In this case, the first electronic device may determine the first perceived brightness based on the first display brightness and the first ambient light brightness, and determine the second perceived brightness based on the second display brightness and the second ambient light brightness. The first electronic device may set the transparency of the mask in the first area based on the first perceived brightness, and set the transparency of the mask in the second area based on the second perceived brightness, so that the perceived brightness of the first area after covering with the mask is equal to the first perceived brightness, and the perceived brightness of the second area after covering with the mask is equal to the second perceived brightness. Alternatively, the first electronic device may set the transparency of the masks in the first area and the second area based on the second perceived brightness, so that the perceived brightness of the first area and the second area after covering with the mask is equal to the second perceived brightness.

In addition, for example, the first electronic device may set the transparency of the mask in the first area based on the first perceived brightness, and set the transparency of the mask in the second area based on the second perceived brightness, so that the perceived brightness of the first area after covering with the mask is equal to the first perceived brightness, and the perceived brightness of the second area after covering with the mask is equal to the second perceived brightness. Because the perceived brightness of the first area after covering with the mask is related to the transparency of the mask in the first area, the first ambient light brightness, and the first display brightness, and the perceived brightness of the second area after covering with the mask is related to the transparency of the mask in the second area, the first ambient light brightness, and the first display brightness, the second perceived brightness is related to the second ambient light brightness and the second display brightness. To avoid that because the first ambient light brightness is different from the second ambient light brightness, when the user on the first display side adjusts the display brightness of the second display by using the first display, brightness adjustment effect of the second display that is viewed by the user on the first display side by using the second area on the first display is different from brightness adjustment effect of the second display that is viewed by the user on the second display side, that is, the perceived brightness of the second area after covering with the mask is not equal to the second perceived brightness, when determining the transparency of the mask in the second area based on the second perceived brightness, the first electronic device may determine whether the first ambient light brightness is less than the second ambient light brightness. If the first ambient light brightness is less than the second ambient light brightness, because lower ambient light brightness corresponds to higher perceived brightness, to ensure that the perceived brightness of the second area after covering with the mask is equal to the second perceived brightness, the first electronic device may reduce the transparency of the mask in the second area corresponding to the second perceived brightness or reduce the first display brightness, to reduce the perceived brightness of the second area after covering with the mask. If the first ambient light brightness is greater than or equal to the second ambient light brightness, because higher ambient light brightness corresponds to lower perceived brightness, to ensure that the perceived brightness of the second area after covering with the mask is equal to the second perceived brightness, the first electronic device may increase the transparency of the mask in the second area corresponding to the second perceived brightness or increase the first display brightness, to increase the perceived brightness of the second area after covering with the mask. Impact caused by a difference between ambient light brightness of environments in which the first display and the second display are located can be reduced by adjusting the transparency of the mask in the second area or the first display brightness, so that the perceived brightness of the second area on the first display is closer to the perceived brightness of the second display.

For example, the first electronic device may set the transparency of the masks in the first area and the second area based on the second perceived brightness, so that the perceived brightness of the first area and the second area after covering with the mask is equal to the second perceived brightness. Because the perceived brightness of the first area after covering with the mask is related to the transparency of the mask in the first area, the first ambient light brightness, and the first display brightness, and the perceived brightness of the second area after covering with the mask is related to the transparency of the mask in the second area, the first ambient light brightness, and the first display brightness, the second perceived brightness is related to the second ambient light brightness and the second display brightness. To avoid that because the first ambient light brightness is different from the second ambient light brightness, when the user on the first display side adjusts the display brightness of the second display by using the first display, brightness adjustment effect of the second display that is viewed by the user on the first display side by using the first area and the second area on the first display is different from brightness adjustment effect of the second display that is viewed by the user on the second display side, that is, the perceived brightness of the first area and the second area after covering with the mask is not equal to the second perceived brightness, when determining the transparency of the masks in the first area and the second area based on the second perceived brightness, the first electronic device may determine whether the first ambient light brightness is less than the second ambient light brightness. If the first ambient light brightness is less than the second ambient light brightness, because lower ambient light brightness corresponds to higher perceived brightness, to ensure that the perceived brightness of the first area and the second area after covering with the mask is equal to the second perceived brightness, the first electronic device may reduce the transparency of the masks in the first area and the second area corresponding to the second perceived brightness or reduce the first display brightness, to reduce the perceived brightness of the first area and the second area after covering with the mask. If the first ambient light brightness is greater than or equal to the second ambient light brightness, because higher ambient light brightness corresponds to lower perceived brightness, to ensure that the perceived brightness of the first area and the second area after covering with the mask is equal to the second perceived brightness, the first electronic device may increase the transparency of the masks in the first area and the second area corresponding to the second perceived brightness or increase the first display brightness, to increase the perceived brightness of the first area and the second area after covering with the mask. Impact caused by a difference between ambient light brightness of environments in which the first display and the second display are located can be reduced by adjusting the transparency of the masks in the first area and the second area or the first display brightness, so that the perceived brightness of the first area and the second area on the first display is closer to the perceived brightness of the second display.

If the first display or the second display does not have an ambient light sensor, and the third electronic device or the fourth electronic device does not have an ambient light sensor, the first electronic device may directly set the transparency of the mask in the first area based on the first display brightness, and directly set the transparency of the mask in the second area based on the second display brightness, so that the display brightness of the first area after covering with the mask is equal to the first display brightness, and the display brightness of the second area after covering with the mask is equal to the second display brightness. Alternatively, the first electronic device may directly set the transparency of the masks in the first area and the second area based on the second display brightness, so that the display brightness of the first area and the second area after covering with the mask is equal to the second display brightness.

In addition, for example, the first electronic device sets the transparency of the mask in the first area based on the first display brightness, and sets the transparency of the mask in the second area based on the second display brightness, so that the display brightness of the first area after covering with the mask is equal to the first display brightness, and the display brightness of the second area after covering with the mask is equal to the second display brightness. Alternatively, for example, the first electronic device sets the transparency of the mask in the first area based on the first perceived brightness, and sets the transparency of the mask in the second area based on the second perceived brightness, so that the perceived brightness of the first area after covering with the mask is equal to the first perceived brightness, and the perceived brightness of the second area after covering with the mask is equal to the second perceived brightness. Because the display brightness of the first area after covering with the mask is related to the transparency of the mask in the first area and the first display brightness, the display brightness of the second area after covering with the mask is related to the transparency of the mask in the second area and the first display brightness, the perceived brightness of the first area after covering with the mask is related to the transparency of the mask in the first area, the first ambient light brightness, and the first display brightness, and the perceived brightness of the second area after covering with the mask is related to the transparency of the mask in the second area, the first ambient light brightness, and the first display brightness, the second perceived brightness is related to the second ambient light brightness and the second display brightness. To avoid that because the first display brightness is less than the second display brightness, consistency between the display brightness of the second area on the first display and the display brightness of the second display or consistency between the perceived brightness of the second area on the first display and the perceived brightness of the second display cannot be achieved by adjusting the transparency of the mask in the second area, and consequently, when the user on the first display side adjusts the display brightness of the second display by using the first display, brightness adjustment effect of the second display that is viewed by the user on the first display side by using the second area on the first display is different from brightness adjustment effect of the second display that is viewed by the user on the second display side, after obtaining the first display brightness and the second display brightness, the first electronic device may determine whether the first display brightness is less than the second display brightness. If the first display brightness is less than the second display brightness, the first electronic device may increase the first display brightness to second target brightness, where the second target brightness is greater than or equal to the second display brightness, that is, increased first display brightness is greater than or equal to the second display brightness. In addition, after the first display brightness is increased to the second target brightness, the first electronic device may further adjust the transparency of the mask in the first area based on the second target brightness. Specifically, in this case, the transparency of the mask in the first area may be reduced, so that the display brightness of the first area after covering with the mask is equal to the display brightness of the first display before covering with the mask. Alternatively, the transparency of the mask in the first area may be further adjusted based on the second target brightness and the first ambient light brightness. Specifically, in this case, the transparency of the mask in the first area may be reduced, so that the perceived brightness of the first area after covering with the mask is equal to the perceived brightness of the first display before covering with the mask.

During specific implementation, if the first display has a light sensor or the third electronic device has an ambient light sensor, the first electronic device may obtain the first ambient light brightness by using the ambient light sensor in the third electronic device or the first display, re-determine the first perceived brightness based on the increased first display brightness and the first ambient light brightness, and adjust the transparency of the mask in the first area based on the re-determined first perceived brightness. If the first display has no light sensor and the third electronic device has no ambient light sensor, the first electronic device may adjust the transparency of the mask in the first area based on the increased first display brightness.

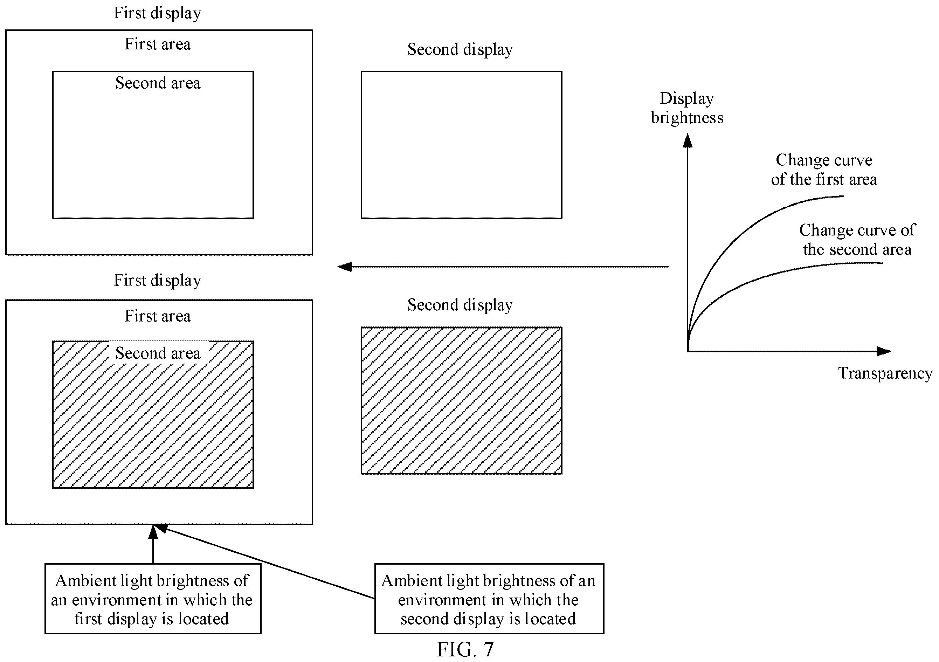

For example, FIG. 7 is a diagram of a brightness adjustment scenario according to an embodiment of this application. As shown in FIG. 7, when the display brightness of the first display and the second display is 0, the transparency of the masks in the first area and the second area displayed on the first display is also 0. When the display brightness of the first display and the second display starts to change, the transparency of the masks in the first area and the second area displayed on the first display also changes accordingly. As shown by a change curve of the first area, the display brightness of the first display increases, and the transparency of the mask in the first area also increases. As shown by a change curve of the second area, the display brightness of the second display increases, and the transparency of the mask in the second area also increases. In addition, for the transparency of the masks in the first area and the second area, the transparency of the mask in the second area may be further corrected based on the ambient light brightness, obtained by using the first display or the third electronic device, of the environment in which the first display is located, and the ambient light brightness, obtained by using the second display or the fourth electronic device, of the environment in which the second display is located.

For example, the first electronic device sets the transparency of the masks in the first area and the second area based on the second display brightness, so that the display brightness of the first area and the second area after covering with the mask is equal to the second display brightness. Alternatively, for example, the first electronic device sets the transparency of the masks in the first area and the second area based on the second perceived brightness, so that the perceived brightness of the first area and the second area after covering with the mask is equal to the second perceived brightness. Because the display brightness of the first area after covering with the mask is related to the transparency of the mask in the first area and the first display brightness, the display brightness of the second area after covering with the mask is related to the transparency of the mask in the second area and the first display brightness, the perceived brightness of the first area after covering with the mask is related to the transparency of the mask in the first area, the first ambient light brightness, and the first display brightness, and the perceived brightness of the second area after covering with the mask is related to the transparency of the mask in the second area, the first ambient light brightness, and the first display brightness, the second perceived brightness is related to the second ambient light brightness and the second display brightness. To avoid that because the first display brightness is less than the second display brightness, consistency between the display brightness of the first area and the second area on the first display and the display brightness of the second display or consistency between the perceived brightness of the first area and the second area on the first display and the perceived brightness of the second display cannot be achieved by adjusting the transparency of the masks in the first area and the second area, and consequently, when the user on the first display side adjusts the display brightness of the second display by using the first display, brightness adjustment effect of the second display that is viewed by the user on the first display side by using the first area and the second area on the first display is different from brightness adjustment effect of the second display that is viewed by the user on the second display side, after obtaining the first display brightness and the second display brightness, the first electronic device may determine whether the first display brightness is less than the second display brightness. If the first display brightness is less than the second display brightness, the first electronic device may increase the first display brightness to second target brightness, where the second target brightness is greater than or equal to the second display brightness, that is, increased first display brightness is greater than or equal to the second display brightness.

### 2. Brightness adjustment implementation

In embodiments of this application, after the first electronic device displays the brightness adjustment operation interface shown in FIG. 5(1) to FIG. 5(4) on the first display, the user may adjust a display brightness level of the second display by selecting the "second display brightness adjustment" icon 502 in the first area or the "second display brightness adjustment" icon 503 in the second area.

When the first electronic device detects an operation (for example, referred to as a second operation) of adjusting the display brightness level of the second display by the user by selecting the "second display brightness adjustment" icon 502 in the first area or the "second display brightness adjustment" icon 503 in the second area, if the "second display brightness adjustment" icon 502 in the first area or the "second display brightness adjustment" icon 503 in the second area is a control of the first display, the first electronic device may send, in response to the operation, a display brightness level (for example, referred to as a first display brightness level) adjusted by the user to the second electronic device. When the second electronic device receives the first display brightness level from the first electronic device, the second electronic device may determine display brightness of the second display corresponding to the first display brightness level, adjust the display brightness of the second display based on the display brightness of the second display corresponding to the first display brightness level, and send the display brightness (for example, referred to as first target brightness) of the second display corresponding to the first display brightness level to the first electronic device, that is, the second electronic device notifies the first electronic device when the display brightness of the second display changes. For example, the display brightness of the second display is brightness 1. After receiving a level 1 from the first electronic device, the second electronic device determines that display brightness of the second display corresponding to the level 1 is brightness 2. In this case, the second electronic device may adjust the display brightness of the second display from the brightness 1 to the brightness 2, and send the brightness 2 to the first electronic device.

It should be understood that, when the user adjusts the display brightness level of the second display by using the control of the first display, only if the first electronic device and the second electronic device are different electronic devices, the first electronic device needs to send the display brightness level adjusted by the user to the second electronic device. If the first electronic device and the second electronic device are a same electronic device, for example, the first electronic device and the second electronic device are different displays of a same in-vehicle terminal device, the first electronic device does not need to send the display brightness level adjusted by the user to the second electronic device.

When the first electronic device detects an operation (for example, referred to as a third operation) of adjusting the display brightness level of the second display by the user by selecting the "second display brightness adjustment" icon 503 in the second area, if the "second display brightness adjustment" icon 503 in the second area is a control of the second display that is projected onto of the first display, the second electronic device may adjust the display brightness of the second display in response to the operation based on display brightness adjusted by the user, and send the adjusted display brightness (for example, referred to as first target brightness) of the second display to the first electronic device, that is, the second electronic device notifies the first electronic device when the display brightness of the second display changes.

When the first electronic device receives, from the second electronic device, the display brightness of the second display corresponding to the first display brightness level or the adjusted display brightness of the second display, the first electronic device may adjust the transparency of the mask in the second area based on the display brightness of the second display corresponding to the first display brightness level or the adjusted display brightness of the second display. Alternatively, the first electronic device may adjust the transparency of the masks in the first area and the second area based on the display brightness of the second display corresponding to the first display brightness level or the adjusted display brightness of the second display.

During specific implementation, when the first electronic device receives, from the second electronic device, the display brightness of the second display corresponding to the first display brightness level, the first electronic device may determine whether the second display has a light sensor or whether the fourth electronic device has an ambient light sensor. If the second display has a light sensor or the fourth electronic device has an ambient light sensor, the first electronic device may obtain, by using the ambient light sensor in the fourth electronic device or the second display, the ambient light brightness of the environment in which the second display is located, re-determine the perceived brightness of the second display based on the display brightness of the second display corresponding to the first display brightness level and the ambient light brightness of the environment in which the second display is located, and adjust the transparency of the mask in the second area based on the re-determined perceived brightness of the second display, or adjust the transparency of the masks in the first area and the second area based on the re-determined perceived brightness of the second display. If the second display has no light sensor and the fourth electronic device has no ambient light sensor, the first electronic device may adjust the transparency of the mask in the second area based on the display brightness of the second display corresponding to the first display brightness level, or adjust the transparency of the masks in the first area and the second area based on the display brightness of the second display corresponding to the first display brightness level.

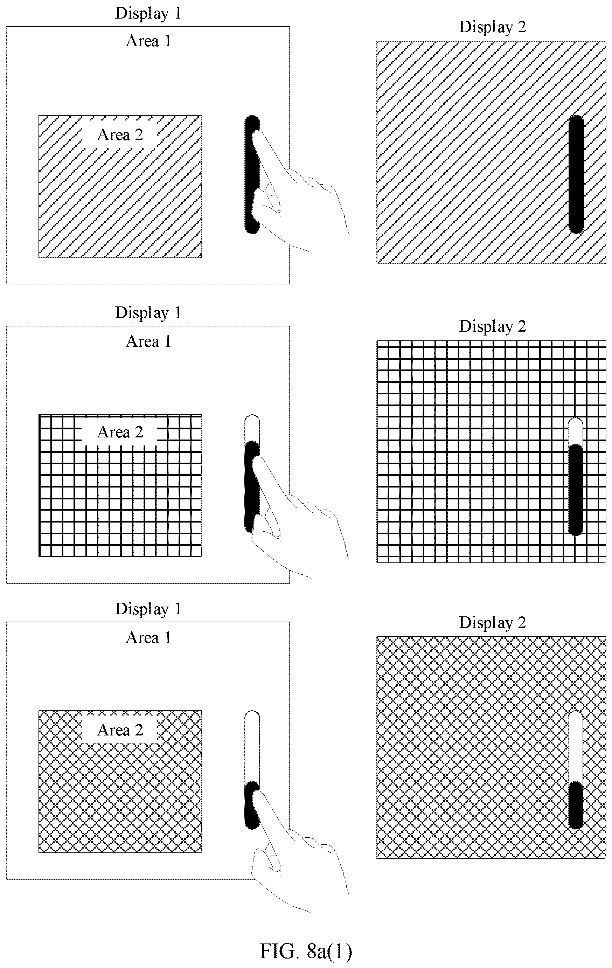

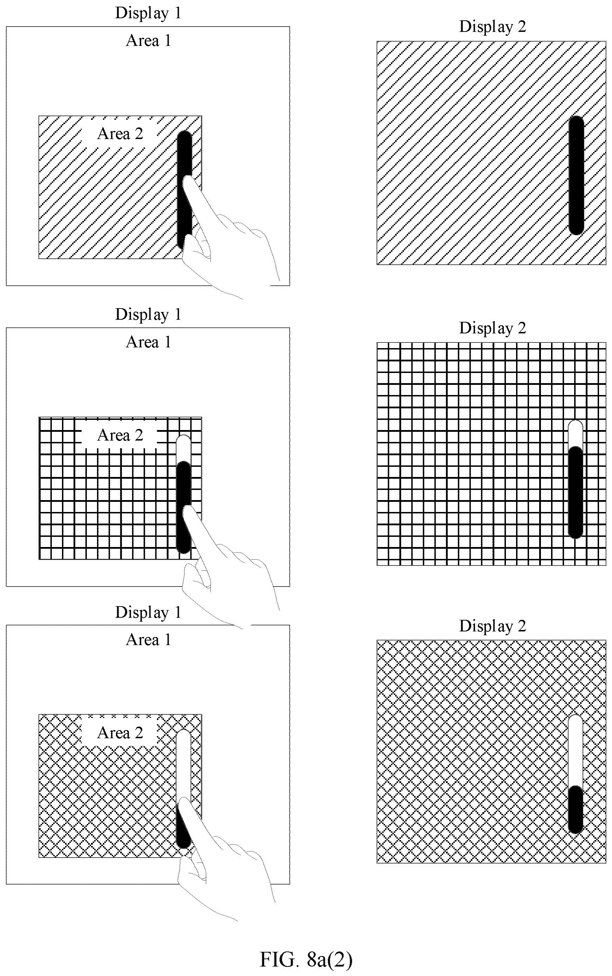

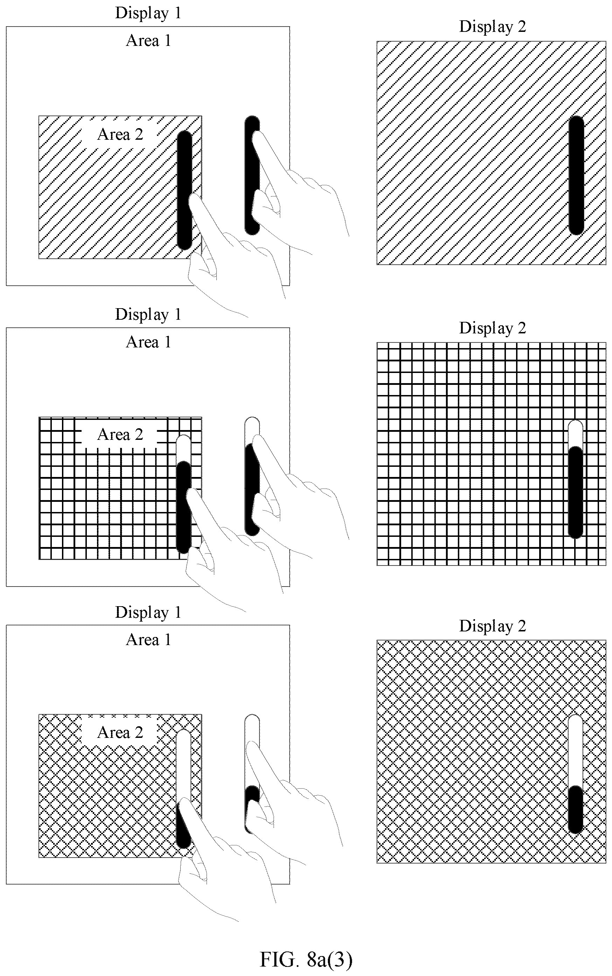

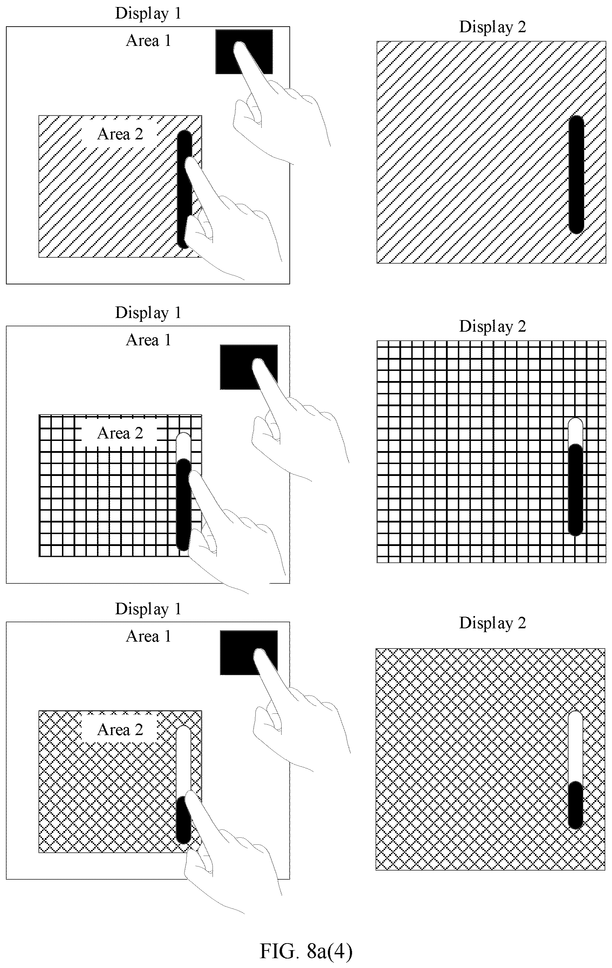

For example, FIG. 8a(1) to FIG. 8a(4) are a diagram of another brightness adjustment scenario according to an embodiment of this application. A display 1 displays an area 1 covered with a mask and an area 2 covered with a mask. If display brightness of the display 1 before covering with the mask is greater than or equal to display brightness of the display 2, transparency of the mask in the area 1 may be set based on the display brightness or perceived brightness of the display 1 before covering with the mask, and transparency of the mask in the area 2 may be set based on the display brightness or perceived brightness of the display 2, so that display brightness of the area 1 after covering with the mask is equal to the display brightness of the display 1 before covering with the mask, or perceived brightness of the area 1 after covering with the mask is equal to the perceived brightness of the display 1 before covering with the mask, and display brightness of the area 2 after covering with the mask is equal to the display brightness of the display 2, or perceived brightness of the area 2 after covering with the mask is equal to the perceived brightness of the display 2. Alternatively, if display brightness of the display 1 before covering with the mask is less than display brightness of the display 2, the display brightness of the display 1 before covering with the mask may be increased, increased display brightness of the display 1 before covering with the mask is greater than or equal to the display brightness of the display 2, transparency of the mask in the area 1 is set based on the increased display brightness or perceived brightness of the display 1 before covering with the mask, and transparency of the mask in the area 2 is set based on the display brightness or perceived brightness of the display 2, so that display brightness of the area 1 after covering with the mask is equal to the increased display brightness of the display 1 before covering with the mask, or perceived brightness of the area 1 after covering with the mask is equal to the increased perceived brightness of the display 1 before covering with the mask, and display brightness of the area 2 after covering with the mask is equal to the display brightness of the display 2, or perceived brightness of the area 2 after covering with the mask is equal to the perceived brightness of the display 2.

As shown in FIG. 8a(1), a scroll bar used to adjust the display brightness of the display 2 is displayed in the area 1 and the display 2, and a brightness adjustment range of the scroll bar is a display brightness range of the display 2. When the user adjusts the display brightness of the display 2 by sliding up or down the scroll bar in the area 1, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the display 2 also changes with the scroll bar in the area 1.

As shown in FIG. 8a(2), a scroll bar used to adjust the display brightness of the display 2 is displayed in the area 2 and the display 2, and a brightness adjustment range of the scroll bar is a display brightness range of the display 2. When the user adjusts the display brightness of the display 2 by sliding up or down the scroll bar in the area 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the display 2 also changes with the scroll bar in the area 2.

As shown in FIG. 8a(3), a scroll bar used to adjust the display brightness of the display 2 is displayed in the area 1, the area 2, and the display 2, and a brightness adjustment range of the scroll bar is a display brightness range of the display 2. When the user adjusts the display brightness of the display 2 by sliding up or down the scroll bar in the area 1 or the area 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the area 2 or the area 1 and the scroll bar in the display 2 also change with the scroll bar in the area 1 or the area 2.

As shown in FIG. 8a(4), an icon used to trigger the area 2 to display a scroll bar used to adjust the display brightness of the display 2 is displayed in the area 1, a scroll bar used to adjust the display brightness of the display 2 is displayed in the display 2, and a brightness adjustment range of the scroll bar is a display brightness range of the display 2. When the user selects the icon in the area 1, the area 2 displays the scroll bar used to adjust the display brightness of the display 2. When the user adjusts the display brightness of the display 2 by sliding up or down the scroll bar in the area 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the display 2 also changes with the scroll bar in the area 2.

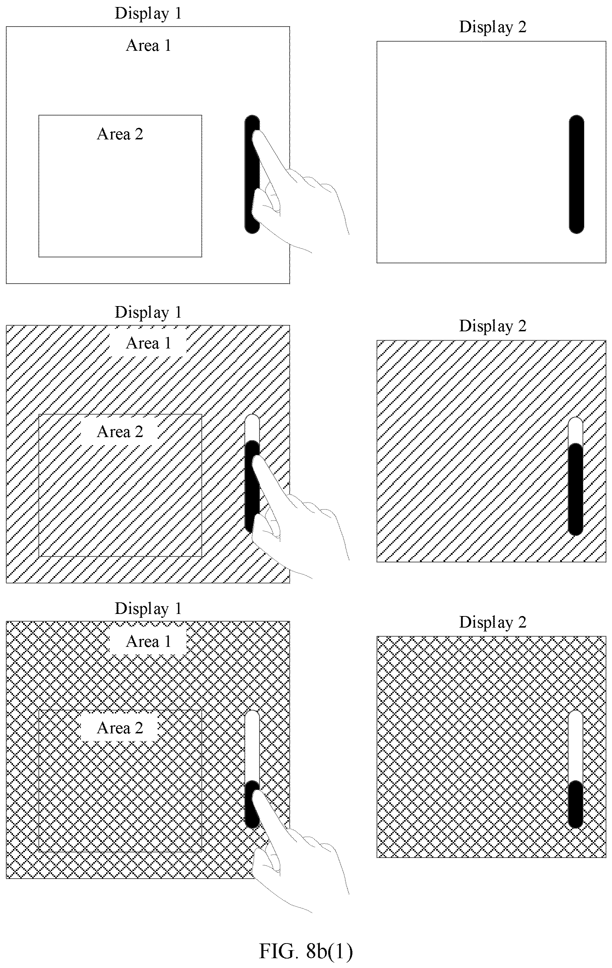

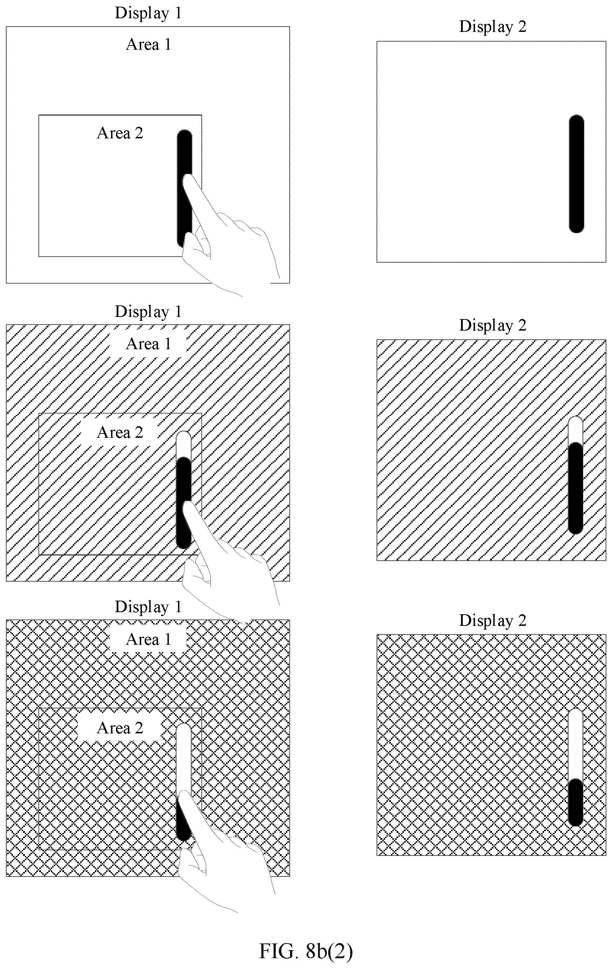

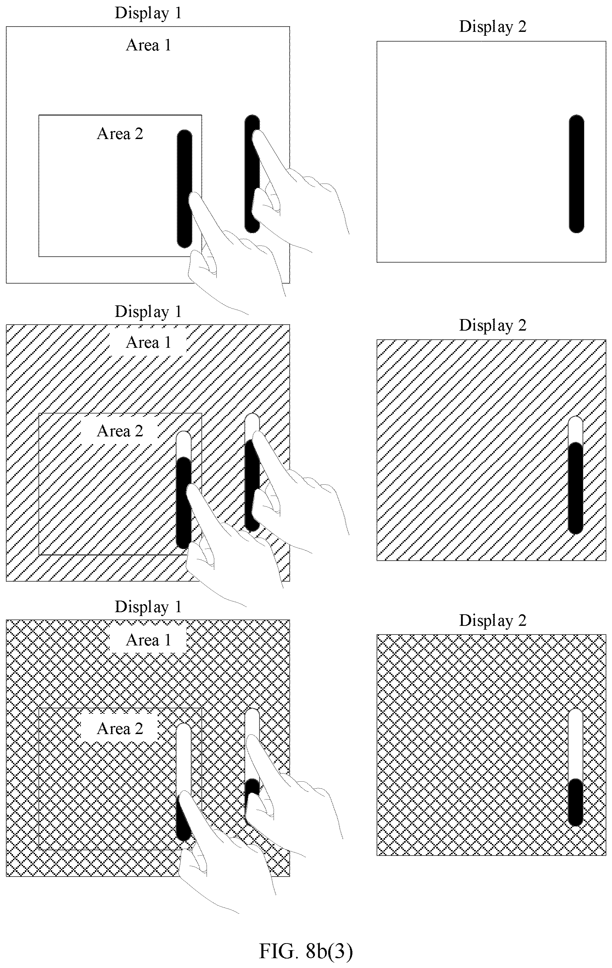

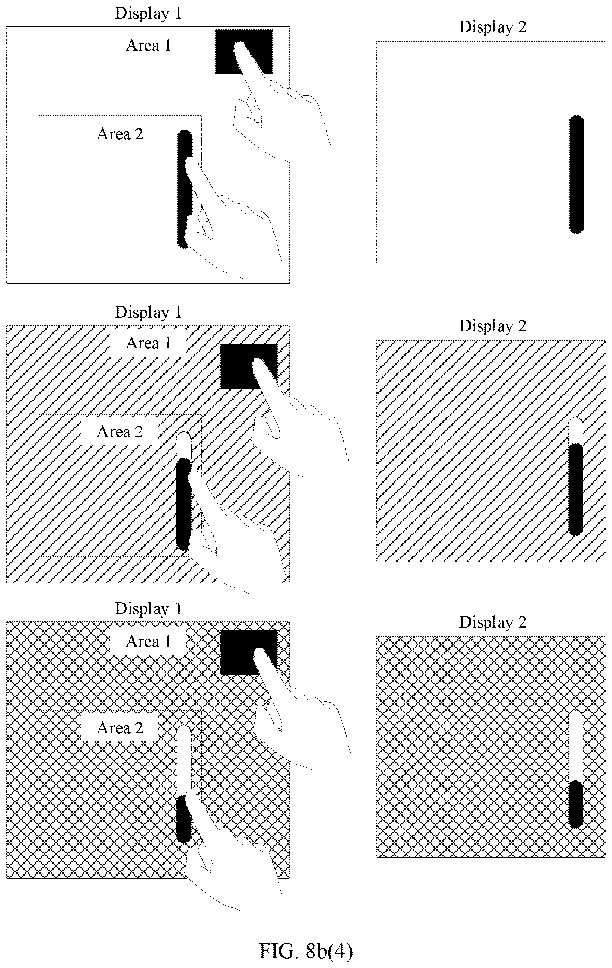

FIG. 8b(1) to FIG. 8b(4) are a diagram of another brightness adjustment scenario according to an embodiment of this application. A display 1 displays an area 1 covered with a mask and an area 2 covered with a mask. If display brightness of the display 1 before covering with the mask is greater than or equal to display brightness of the display 2, transparency of the masks in the area 1 and the area 2 may be set based on the display brightness or perceived brightness of the display 2, so that display brightness of the area 1 and the area 2 after covering with the mask is equal to the display brightness of the display 2, or perceived brightness of the area 1 and the area 2 after covering with the mask is equal to the perceived brightness of the display 2. Alternatively, if display brightness of the display 1 before covering with the mask is less than display brightness of the display 2, the display brightness of the display 1 before covering with the mask may be increased, increased display brightness of the display 1 before covering with the mask is greater than or equal to the display brightness of the display 2, and transparency of the masks in the area 1 and the area 2 is set based on the display brightness or perceived brightness of the display 2, so that display brightness of the area 1 and the area 2 after covering with the mask is equal to the display brightness of the display 2, or perceived brightness of the area 1 and the area 2 after covering with the mask is equal to the perceived brightness of the display 2.

As shown in FIG. 8b(1), a scroll bar used to adjust the display brightness of the display 2 is displayed in the area 1 and the display 2, and a brightness adjustment range of the scroll bar is a display brightness range of the display 2. When the user adjusts the display brightness of the display 2 by sliding up or down the scroll bar in the area 1, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the display 2 also changes with the scroll bar in the area 1.

As shown in FIG. 8b(2), a scroll bar used to adjust the display brightness of the display 2 is displayed in the area 2 and the display 2, and a brightness adjustment range of the scroll bar is a display brightness range of the display 2. When the user adjusts the display brightness of the display 2 by sliding up or down the scroll bar in the area 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the display 2 also changes with the scroll bars in the area 1 and the area 2.

As shown in FIG. 8b(3), a scroll bar used to adjust the display brightness of the display 2 is displayed in the area 1, the area 2, and the display 2, and a brightness adjustment range of the scroll bar is a display brightness range of the display 2. When the user adjusts the display brightness of the display 2 by sliding up or down the scroll bar in the area 1 or the area 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the area 2 or the area 1 and the scroll bar in the display 2 also change with the scroll bar in the area 1 or the area 2.

As shown in FIG. 8b(4), an icon used to trigger the area 2 to display a scroll bar used to adjust the display brightness of the display 2 is displayed in the area 1, a scroll bar used to adjust the display brightness of the display 2 is displayed in the display 2, and a brightness adjustment range of the scroll bar is a display brightness range of the display 2. When the user selects the icon in the area 1, the area 2 displays the scroll bar used to adjust the display brightness of the display 2. When the user adjusts the display brightness of the display 2 by sliding up or down the scroll bar in the area 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the display 2 also changes with the scroll bar in the area 2.

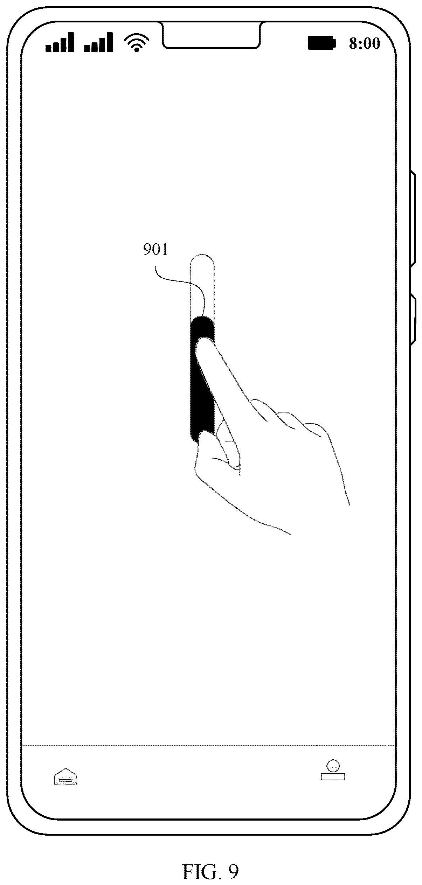

In embodiments of this application, after the first electronic device displays the brightness adjustment operation interface shown in FIG. 5(1) to FIG. 5(4) on the first display, the second electronic device may display a brightness adjustment operation interface shown in FIG. 9 on the second display, where a "brightness adjustment" icon 901 is displayed in the interface. The user may adjust the display brightness of the second display by selecting the "brightness adjustment" icon 901. When the second electronic device detects an operation of selecting the "brightness adjustment" icon 901 by the user, in response to the operation, the second electronic device may adjust the display brightness of the second display based on display brightness adjusted by the user, and send the adjusted display brightness of the second display to the first electronic device. For example, when the second electronic device detects that the user adjusts the display brightness of the second display from A1 to A2, the second electronic device may adjust the display brightness of the second display from A1 to A2, and send A2 to the first electronic device.

Alternatively, when the second electronic device detects that the ambient light brightness of the environment in which the second display is located changes, in response to the change, the second electronic device may adjust the display brightness of the second display based on a mapping relationship between the ambient light brightness of the environment in which the second display is located and the display brightness of the second display, and send the adjusted display brightness of the second display to the first electronic device. For example, when the second electronic device detects that the ambient light brightness of the environment in which the second display is located changes from A to B, the second electronic device may adjust the display brightness of the second display from A1 to B1 based on the mapping relationship between the ambient light brightness of the environment in which the second display is located and the display brightness of the second display, and send B1 to the first electronic device, where A corresponds to A1, and B corresponds to B1.

Alternatively, when the second electronic device detects that the display brightness of the second display changes, the change may be caused by a system application or a third-party application (for example, referred to as a first application) that is in the second electronic device and that can adjust the display brightness of the second display. In response to the change, the second electronic device may send the changed display brightness of the second display to the first electronic device. For example, when the user uses the first application by using the second display, the first application may adjust the display brightness of the second display from Al to A2. When the second electronic device detects that the first application adjusts the display brightness of the second display from A1 to A2, the second electronic device may send B2 to the first electronic device.

When the first electronic device receives the adjusted or changed display brightness of the second display from the second electronic device, because the perceived brightness of the second area after covering with the mask is related to the display brightness of the second area after covering with the mask and the ambient light brightness of the environment in which the first display is located, the display brightness of the second area after covering with the mask is related to the transparency of the mask in the second area and the display brightness of the first display before covering with the mask. The perceived brightness of the second display is related to the display brightness of the second display and the ambient light brightness of the environment in which the second display is located. Therefore, the first electronic device may adjust, based on the adjusted or changed display brightness of the second display from the second electronic device, the transparency of the mask in the second area and/or the display brightness of the first display before covering with the mask, so that the display brightness of the second area after covering with the mask is equal to the display brightness of the second display, or the perceived brightness of the second area after covering with the mask is equal to the perceived brightness of the second display. Therefore, when adjusting the display brightness of the second display by using the first display, the user can intuitively perceive the display brightness or the perceived brightness of the second display based on the display brightness or the perceived brightness of the second area, thereby improving brightness adjustment efficiency and adjustment effect of the display.

Alternatively, when the first electronic device receives the adjusted or changed display brightness of the second display from the second electronic device, because the perceived brightness of the first area after covering with the mask is related to the display brightness of the first area after covering with the mask and the ambient light brightness of the environment in which the first display is located, the display brightness of the first area after covering with the mask is related to the transparency of the mask in the first area and the display brightness of the first display before covering with the mask. The perceived brightness of the second area after covering with the mask is related to the display brightness of the second area after covering with the mask and the ambient light brightness of the environment in which the first display is located, and the display brightness of the second area after covering with the mask is related to the transparency of the mask in the second area and the display brightness of the first display before covering with the mask. The perceived brightness of the second display is related to the display brightness of the second display and the ambient light brightness of the environment in which the second display is located. Therefore, the first electronic device may adjust, based on the adjusted or changed display brightness of the second display from the second electronic device, the transparency of the masks in the first area and the second area and/or the display brightness of the first display before covering with the mask, so that the display brightness of the first area and the second area after covering with the mask is equal to the display brightness of the second display, or the perceived brightness of the first area and the second area after covering with the mask is equal to the perceived brightness of the second display. Therefore, when adjusting the display brightness of the second display by using the first display, the user can intuitively perceive the display brightness or the perceived brightness of the second display based on the display brightness or the perceived brightness of the first area and the second area, thereby improving brightness adjustment efficiency and adjustment effect of the display.

During specific implementation, the adjusted or changed display brightness of the second display that is received by the first electronic device from the second electronic device has three sources: A source 1 refers to obtaining by the second electronic device in response to adjustment of the user on the second display side, a source 2 refers to obtaining by the second electronic device through automatic adjustment when the ambient light brightness of the environment in which the second display is located changes, and a source 3 refers to obtaining through automatic adjustment by the first application in the second electronic device. Therefore, when the first electronic device adjusts, based on the adjusted or changed display brightness of the second display from the second electronic device, the transparency of the mask in the second area and/or the display brightness of the first display before covering with the mask, so that the display brightness of the second area after covering with the mask is equal to the display brightness of the second display, or the perceived brightness of the second area after covering with the mask is equal to the perceived brightness of the second display, or when the first electronic device adjusts, based on the adjusted or changed display brightness of the second display from the second electronic device, the transparency of the masks in the first area and the second area and/or the display brightness of the first display before covering with the mask, so that the display brightness of the first area and the second area after covering with the mask is equal to the display brightness of the second display, or the perceived brightness of the first area and the second area after covering with the mask is equal to the perceived brightness of the second display, not only a difference between the ambient light brightness of the environment in which the first display is located and the ambient light brightness of the environment in which the second display is located needs to be considered, but also a brightness habit of the user on the second display side or a brightness habit of an application displayed on the second display needs to be considered.

If the first display has a light sensor or the third electronic device has an ambient light sensor, the first electronic device may obtain, by using the ambient light sensor in the third electronic device or the first display, the ambient light brightness of the environment in which the first display is located. If the second display has a light sensor or the fourth electronic device has an ambient light sensor, the first electronic device may obtain, by using the ambient light sensor in the fourth electronic device or the second display, the ambient light brightness of the environment in which the second display is located. After obtaining the ambient light brightness of the environment in which the first display is located and the ambient light brightness of the environment in which the second display is located, the first electronic device may consider the brightness habit of the user on the second display side or the brightness habit of the application displayed on the second display, and does not directly adjust, based on the adjusted or changed display brightness of the second display from the second electronic device, the transparency of the mask in the second area and/or the display brightness of the first display before covering with the mask, or the transparency of the masks in the first area and the second area and/or the display brightness of the first display before covering with the mask, but determines, based on the mapping relationship between the ambient light brightness of the environment in which the second display is located and the display brightness of the second display, display brightness (for example, referred to as third display brightness) corresponding to the ambient light brightness of the environment in which the second display is located and display brightness (for example, referred to as fourth display brightness) corresponding to the ambient light brightness of the environment in which the first display is located. That is, if the display brightness of the second display is the third display brightness, and the display brightness of the second area after covering with the mask is the fourth display brightness, because the third display brightness and the ambient light brightness of the environment in which the second display is located, and the fourth display brightness and the ambient light brightness of the environment in which the first display is located all meet the mapping relationship between the ambient light brightness of the environment in which the second display is located and the display brightness of the second display, the perceived brightness of the second display is the same as the display brightness of the second area after covering with the mask. Alternatively, if the display brightness of the second display is the third display brightness, and the display brightness of the first area and the second area after covering with the mask is the fourth display brightness, because the third display brightness and the ambient light brightness of the environment in which the second display is located, and the fourth display brightness and the ambient light brightness of the environment in which the first display is located all meet the mapping relationship between the ambient light brightness of the environment in which the second display is located and the display brightness of the second display, the perceived brightness of the second display is the same as the display brightness of the first area and the second area after covering with the mask.

After determining the third display brightness and the fourth display brightness, the first electronic device may determine fifth display brightness (also referred to as third target brightness) based on the third display brightness, the fourth display brightness, and the adjusted or changed display brightness of the second display from the second electronic device. A difference between the third display brightness and the adjusted or changed display brightness of the second display from the second electronic device is a first difference, a difference between the fourth display brightness and the fifth display brightness is a second difference, and the first difference is positively correlated with the second difference. That is, considering the brightness habit of the user on the second display side or the brightness habit of the application displayed on the second display, when the display brightness of the second display changes from the third display brightness to the adjusted or changed display brightness of the second display from the second electronic device, the display brightness of the second area after covering with the mask also needs to change from the fourth display brightness to the fifth display brightness, to ensure that the perceived brightness of the second display is the same as the display brightness of the second area after covering with the mask; or the display brightness of the first area and the second area after covering with the mask also needs to change from the fourth display brightness to the fifth display brightness, to ensure that the perceived brightness of the second display is the same as the display brightness of the first area and the second area after covering with the mask.

After the first electronic device determines the fifth display brightness, because the display brightness of the second area after covering with the mask is related to the transparency of the mask in the second area and the display brightness of the first display before covering with the mask, and when the transparency of the mask in the second area remains unchanged, higher display brightness of the first display before covering with the mask indicates higher display brightness of the second area after covering with the mask, or when the display brightness of the first display before covering with the mask remains unchanged, higher transparency of the mask in the second area indicates higher display brightness of the second area after covering with the mask, the first electronic device may adjust, based on the fifth display brightness, the transparency of the mask in the second area and/or the display brightness of the first display before covering with the mask, so that the display brightness of the second area after covering with the mask is equal to the fifth display brightness. Therefore, in this case, the perceived brightness of the second display is the same as the display brightness of the second area after covering with the mask. For example, if the fifth display brightness is greater than or equal to the display brightness of the first display before covering with the mask, the first electronic device may keep the transparency of the mask in the second area unchanged, and increase the display brightness of the first display before covering with the mask; or the first electronic device may increase the transparency of the mask in the second area, and keep the display brightness of the first display before covering with the mask unchanged; or the first electronic device may decrease the transparency of the mask in the second area, and increase the display brightness of the first display before covering with the mask; or the first electronic device may increase the transparency of the mask in the second area, and decrease the display brightness of the first display before covering with the mask. If the fifth display brightness is less than the display brightness of the first display before covering with the mask, the first electronic device may keep the transparency of the mask in the second area unchanged, and decrease the display brightness of the first display before covering with the mask; or the first electronic device may decrease the transparency of the mask in the second area, and keep the display brightness of the first display before covering with the mask unchanged; or the first electronic device may decrease the transparency of the mask in the second area, and increase the display brightness of the first display before covering with the mask; or the first electronic device may increase the transparency of the mask in the second area, and decrease the display brightness of the first display before covering with the mask, so that the display brightness of the second area after covering with the mask is equal to the fifth display brightness. It may be understood that the display brightness of the first area of the first display after covering with the mask is related to the transparency of the mask in the first area and the display brightness of the first display before covering with the mask. Therefore, when the display brightness of the first display before covering with the mask is adjusted, so that the display brightness of the second area after covering with the mask is equal to the fifth display brightness, the display brightness of the first area may not be equal to the display brightness of the first display before covering with the mask. In this case, the transparency of the mask in the first area of the first display may be further adjusted, so that the display brightness of the first area after covering with the mask is equal to the display brightness of the first display before covering with the mask.

For example, if the ambient light brightness of the environment in which the second display is located is A, it may be determined, based on the mapping relationship between the ambient light brightness of the environment in which the second display is located and the display brightness of the second display, that the display brightness of the second display should be A1, and it may be determined, based on the ambient light brightness A of the environment in which the second display is located and the display brightness A1 of the second display, that the perceived brightness of the second display is a1. However, because display brightness in different user habits is different, the user on the second display side may adjust the display brightness of the second display to A2. In this case, the perceived brightness of the second display also changes to a2 accordingly. In addition, to ensure that brightness adjustment effect of the second display that is viewed by the user on the first display side by using the second area displayed on the first display is the same as brightness adjustment effect of the second display that is viewed by the user on the second display side, the perceived brightness of the second area after covering with the mask is set to be equal to the perceived brightness of the second display. Therefore, the perceived brightness, of the second area displayed on the first display, after covering with the mask also changes from a1 to a2 accordingly. The perceived brightness of the second area after covering with the mask is related to the display brightness of the second area after covering with the mask and the ambient light brightness of the environment in which the first display is located, and the display brightness of the second area after covering with the mask is related to the transparency of the mask covering the second area and the display brightness of the first display before covering with the mask. If the ambient light brightness of the environment in which the first display is located is B, it may be determined, based on the mapping relationship between the ambient light brightness of the environment in which the second display is located and the display brightness of the second display, that the display brightness of the second area after covering with the mask should be B1, and the perceived brightness of the second area after covering with the mask should be a1. However, considering the brightness habit of the user on the second display side, the display brightness of the second area after covering with the mask is actually B2, and the perceived brightness of the second area after covering with the mask should be actually a2, where a difference between B2 and B1 is positively correlated with a difference between A1 and A2. In this case, the first electronic device may adjust the transparency of the mask covering the second area and/or the display brightness of the first display before covering with the mask, so that the display brightness of the second area after covering with the mask is B2.

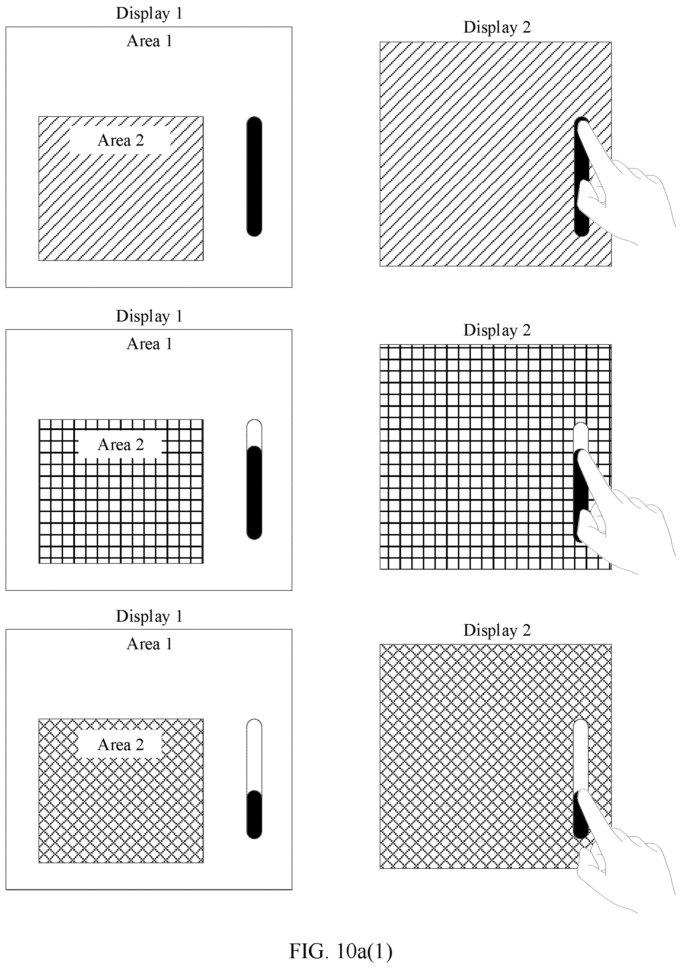

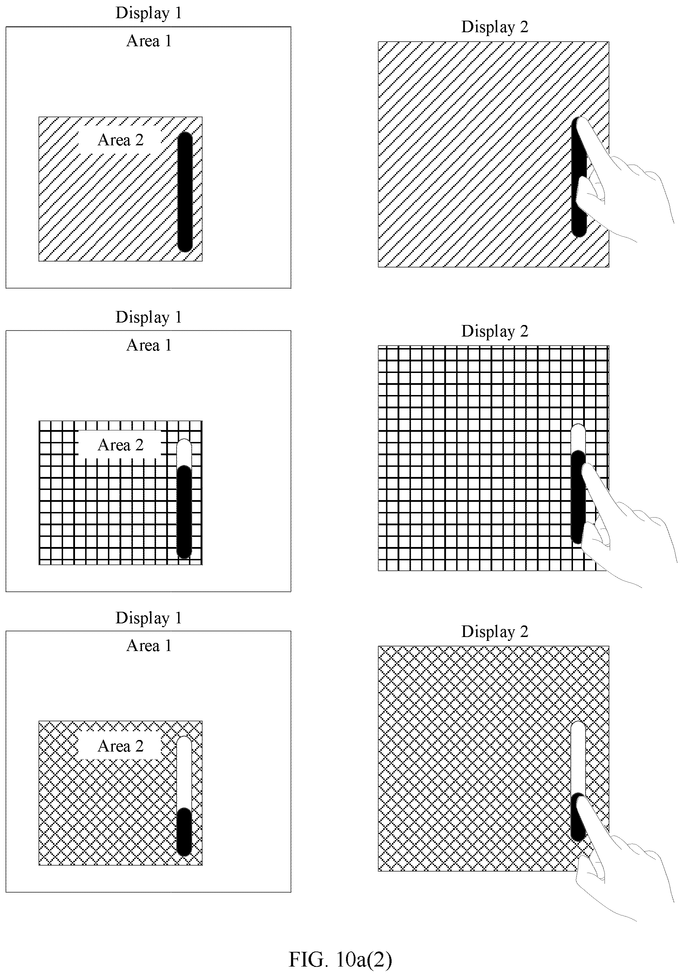

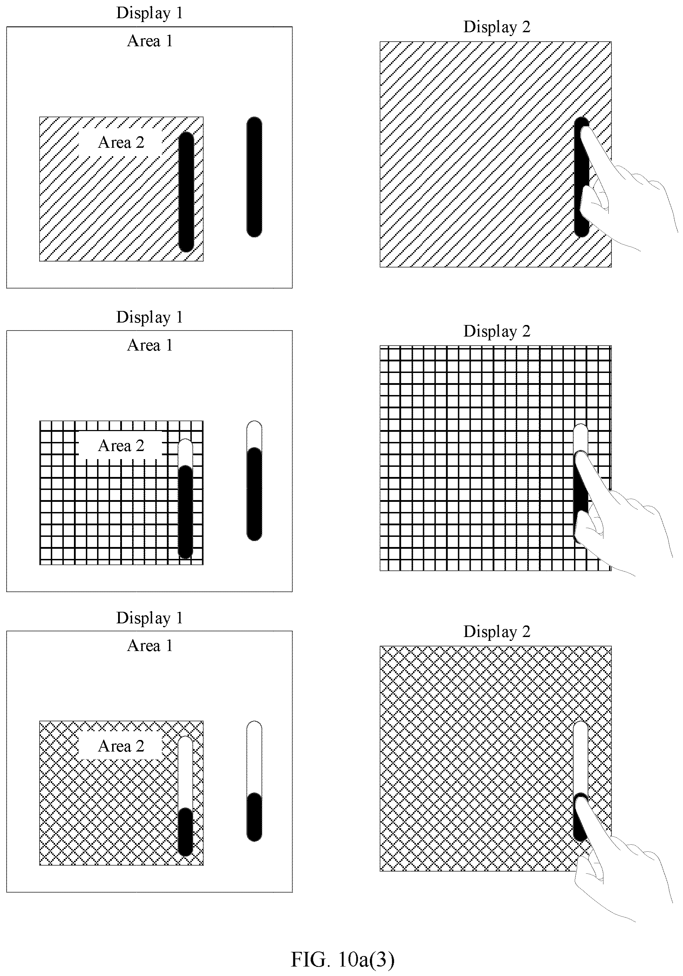

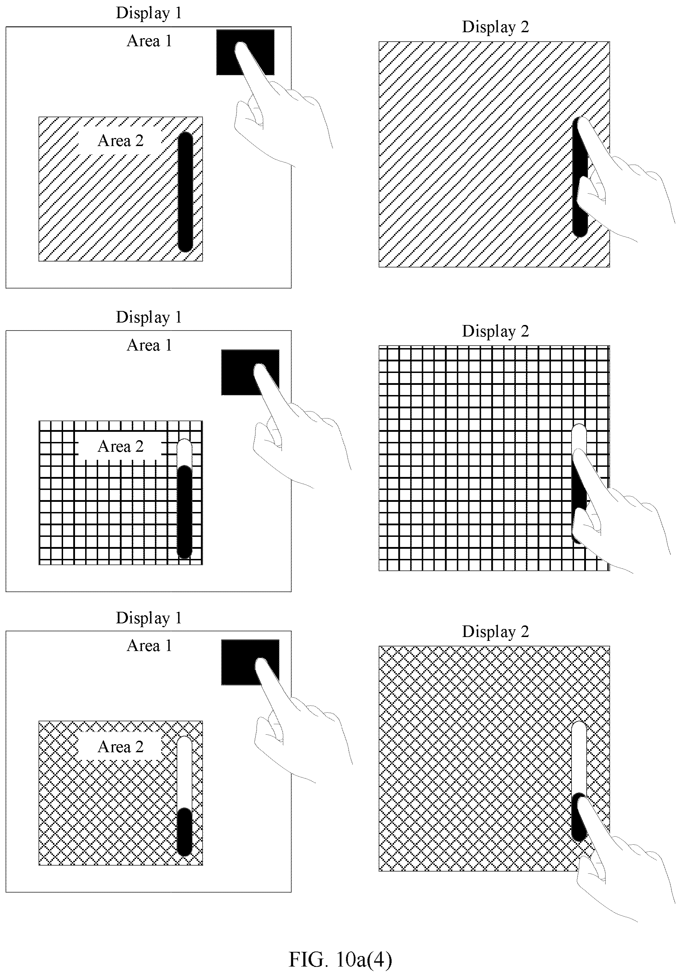

For example, FIG. 10a(1) to FIG. 10a(4) are a diagram of another brightness adjustment scenario according to an embodiment of this application. A display 1 displays an area 1 covered with a mask and an area 2 covered with a mask. As shown in FIG. 10a(1), a scroll bar used to adjust the display brightness of the display 2 is displayed in the area 1 and the display 2, and a brightness adjustment range of the scroll bar is a display brightness range of the display 2. When the user adjusts the display brightness of the display 2 by sliding up or down the scroll bar in the display 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the area 1 also changes with the scroll bar in the display 2.

As shown in FIG. 10a(2), a scroll bar used to adjust the display brightness of the display 2 is displayed in the area 2 and the display 2, and a brightness adjustment range of the scroll bar is a display brightness range of the display 2. When the user adjusts the display brightness of the display 2 by sliding up or down the scroll bar in the display 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the area 2 also changes with the scroll bar in the display 2.

As shown in FIG. 10a(3), a scroll bar used to adjust the display brightness of the display 2 is displayed in the area 1, the area 2, and the display 2, and a brightness adjustment range of the scroll bar is a display brightness range of the display 2. When the user adjusts the display brightness of the display 2 by sliding up or down the scroll bar in the display 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bars in the area 1 and the area 2 also changes with the scroll bar in the display 2.

As shown in FIG. 10a(4), an icon used to trigger the area 2 to display a scroll bar used to adjust the display brightness of the display 2 is displayed in the area 1, a scroll bar used to adjust the display brightness of the display 2 is displayed in the display 2, and a brightness adjustment range of the scroll bar is a display brightness range of the display 2. When the user selects the icon in the area 1, the area 2 displays the scroll bar used to adjust the display brightness of the display 2. When the user adjusts the display brightness of the display 2 by sliding up or down the scroll bar in the display 2, the transparency of the mask in the area 2 changes with the display brightness of the display 2. For example, higher display brightness of the display 2 indicates higher transparency of the mask in the area 2, and lower display brightness of the display 2 indicates lower transparency of the mask in the area 2. In addition, in this case, the scroll bar in the area 2 also changes with the scroll bar in the display 2.

Alternatively, after the first electronic device determines the fifth display brightness, because the display brightness of the first area after covering with the mask is related to the transparency of the mask in the first area and the display brightness of the first display before covering with the mask, the display brightness of the second area after covering with the mask is related to the transparency of the mask in the second area and the display brightness of the first display before covering with the mask, and when the transparency of the masks in the first area and the second area remains unchanged, higher display brightness of the first display before covering with the mask indicates higher display brightness of the first area and the second area after covering with the mask, or when the display brightness of the first display before covering with the mask remains unchanged, higher transparency of the masks in the first area and the second area indicates higher display brightness of the first area and the second area after covering with the mask, the first electronic device may adjust, based on the fifth display brightness, the transparency of the masks in the first area and the second area and/or the display brightness of the first display before covering with the mask, so that the display brightness of the first area and the second area after covering with the mask is equal to the fifth display brightness. Therefore, in this case, the perceived brightness of the second display is the same as the display brightness of the first area and the second area after covering with the mask. For example, if the fifth display brightness is greater than or equal to the display brightness of the first display before covering with the mask, the first electronic device may keep the transparency of the masks in the first area and the second area unchanged, and increase the display brightness of the first display before covering with the mask; or the first electronic device may increase the transparency of the masks in the first area and the second area, and keep the display brightness of the first display before covering with the mask unchanged; or the first electronic device may decrease the transparency of the masks in the first area and the second area, and increase the display brightness of the first display before covering with the mask; or the first electronic device may increase the transparency of the masks in the first area and the second area, and decrease the display brightness of the first display before covering with the mask. If the fifth display brightness is less than the display brightness of the first display before covering with the mask, the first electronic device may keep the transparency of the masks in the first area and the second area unchanged, and decrease the display brightness of the first display before covering with the mask; or the first electronic device may decrease the transparency of the masks in the first area and the second area, and keep the display brightness of the first display before covering with the mask unchanged; or the first electronic device may decrease the transparency of the masks in the first area and the second area, and increase the display brightness of the first display before covering with the mask; or the first electronic device may increase the transparency of the masks in the first area and the second area, and decrease the display brightness of the first display before covering with the mask, so that the display brightness of the first area and the second area after covering with the mask is equal to the fifth display brightness.

For example, if the ambient light brightness of the environment in which the second display is located is A, it may be determined, based on the mapping relationship between the ambient light brightness of the environment in which the second display is located and the display brightness of the second display, that the display brightness of the second display should be A1, and it may be determined, based on the ambient light brightness A of the environment in which the second display is located and the display brightness A1 of the second display, that the perceived brightness of the second display is a1. However, because display brightness in different user habits is different, the user on the second display side may adjust the display brightness of the second display to A2. In this case, the perceived brightness of the second display also changes to a2 accordingly. In addition, to ensure that brightness adjustment effect of the second display that is viewed by the user on the first display side by using the first area and the second area displayed on the first display is the same as brightness adjustment effect of the second display that is viewed by the user on the second display side, the perceived brightness of the first area and the second area after covering with the mask is set to be equal to the perceived brightness of the second display. Therefore, the perceived brightness, of the first area and the second area displayed on the first display, after covering with the mask also changes from a1 to a2 accordingly. The perceived brightness of the first area after covering with the mask is related to the display brightness of the first area after covering with the mask and the ambient light brightness of the environment in which the first display is located, the perceived brightness of the second area after covering with the mask is related to the display brightness of the second area after covering with the mask and the ambient light brightness of the environment in which the first display is located, the display brightness of the first area after covering with the mask is related to the transparency of the mask covering the first area and the display brightness of the first display before covering with the mask, and the display brightness of the second area after covering with the mask is related to the transparency of the mask covering the second area and the display brightness of the first display before covering with the mask. If the ambient light brightness of the environment in which the first display is located is B, it may be determined, based on the mapping relationship between the ambient light brightness of the environment in which the second display is located and the display brightness of the second display, that the display brightness of the first area and the second area after covering with the mask should be B1, and the perceived brightness of the first area and the second area after covering with the mask should be a1. However, in consideration of the brightness habit of the user on the second display side, the display brightness of the first area and the second area after covering with the mask is actually B2, and the perceived brightness of the first area and the second area after covering with the mask is actually a2, where a difference between B2 and B1 is positively correlated with a difference between A1 and A2. In this case, the first electronic device may adjust the transparency of the masks covering the first area and the second area and/or the display brightness of the first display before covering with the mask, so that the display brightness of the first area and the second area after covering with the mask is B2.

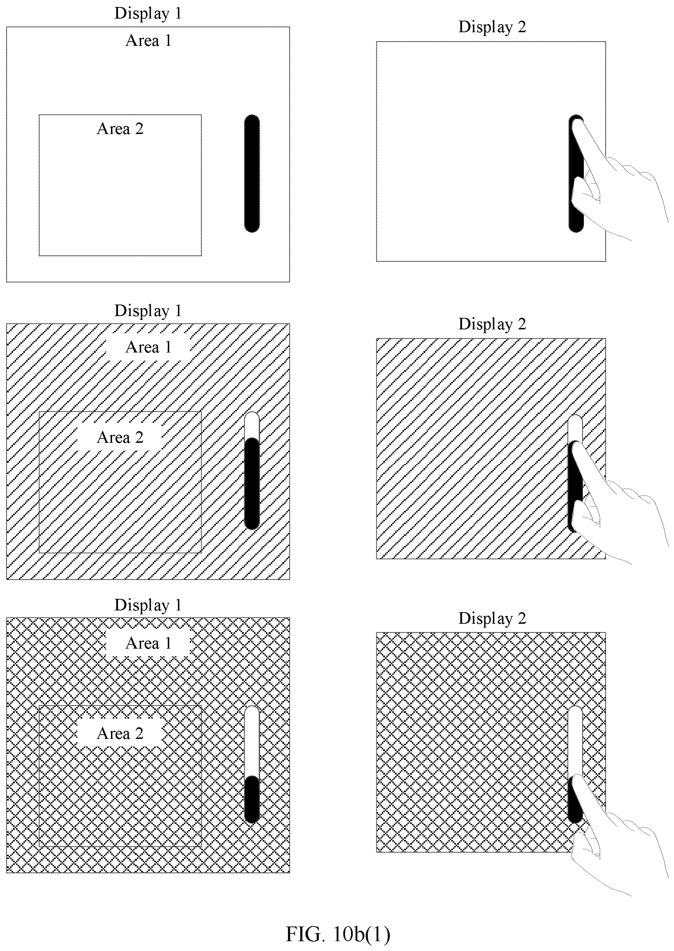

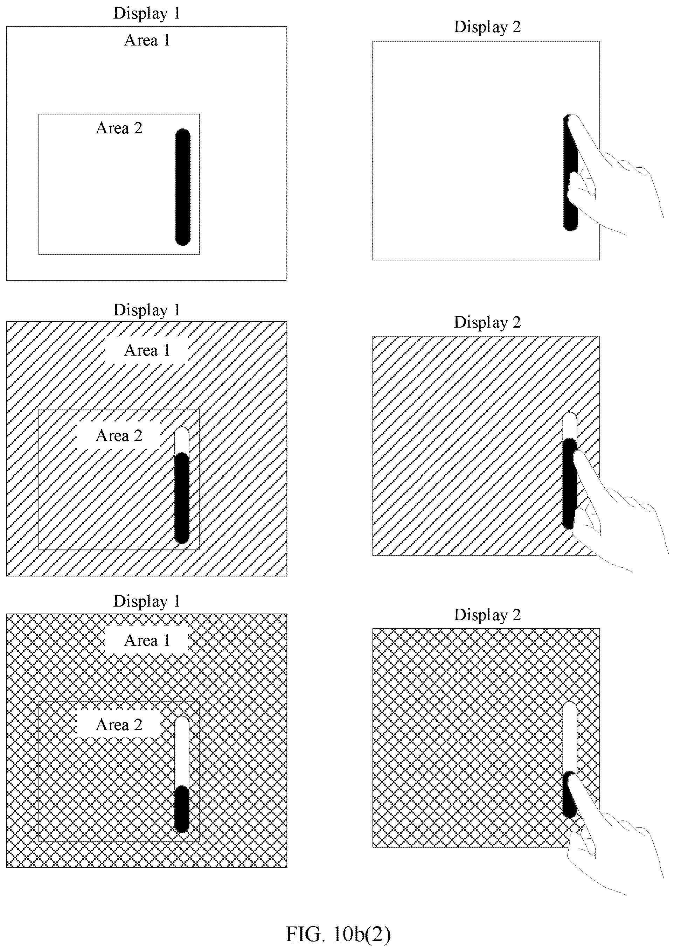

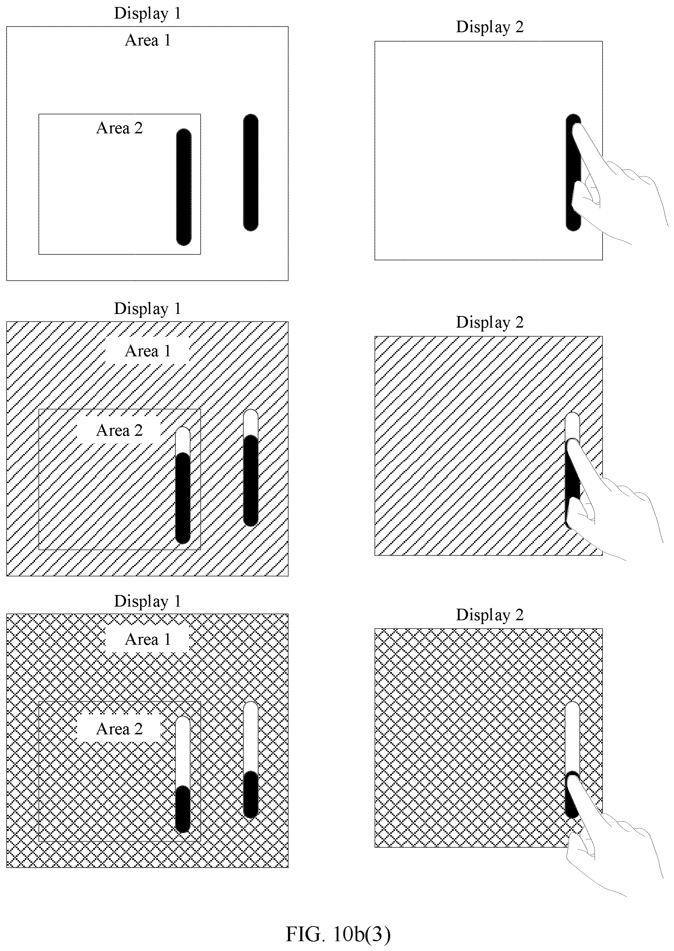

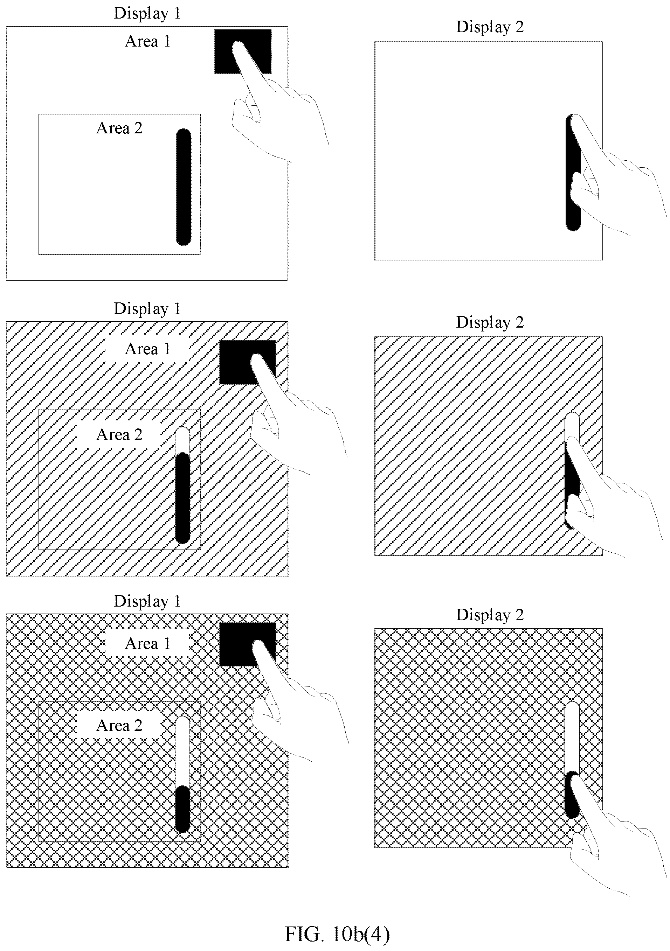

For example, FIG. 10b(1) to FIG. 10b(4) are a diagram of another brightness adjustment scenario according to an embodiment of this application. A display 1 displays an area 1 covered with a mask and an area 2 covered with a mask. As shown in FIG. 10b(1), a scroll bar used to adjust the display brightness of the display 2 is displayed in the area 1 and the display 2, and a brightness adjustment range of the scroll bar is a display brightness range of the display 2. When the user adjusts the display brightness of the display 2 by sliding up or down the scroll bar in the display 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the area 1 also changes with the scroll bar in the display 2.

As shown in FIG. 10b(2), a scroll bar used to adjust the display brightness of the display 2 is displayed in the area 2 and the display 2, and a brightness adjustment range of the scroll bar is a display brightness range of the display 2. When the user adjusts the display brightness of the display 2 by sliding up or down the scroll bar in the display 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the area 2 also changes with the scroll bar in the display 2.

As shown in FIG. 10b(3), a scroll bar used to adjust the display brightness of the display 2 is displayed in the area 1, the area 2, and the display 2, and a brightness adjustment range of the scroll bar is a display brightness range of the display 2. When the user adjusts the display brightness of the display 2 by sliding up or down the scroll bar in the display 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bars in the area 1 and the area 2 also changes with the scroll bar in the display 2.

As shown in FIG. 10b(4), an icon used to trigger the area 2 to display a scroll bar used to adjust the display brightness of the display 2 is displayed in the area 1, a scroll bar used to adjust the display brightness of the display 2 is displayed in the display 2, and a brightness adjustment range of the scroll bar is a display brightness range of the display 2. When the user selects the icon in the area 1, the area 2 displays the scroll bar used to adjust the display brightness of the display 2. When the user adjusts the display brightness of the display 2 by sliding up or down the scroll bar in the display 2, the transparency of the masks in the area 1 and the area 2 changes with the display brightness of the display 2. For example, higher display brightness of the display 2 indicates higher transparency of the masks in the area 1 and the area 2, and lower display brightness of the display 2 indicates lower transparency of the masks in the area 1 and the area 2. In addition, in this case, the scroll bar in the area 2 also changes with the scroll bar in the display 2.

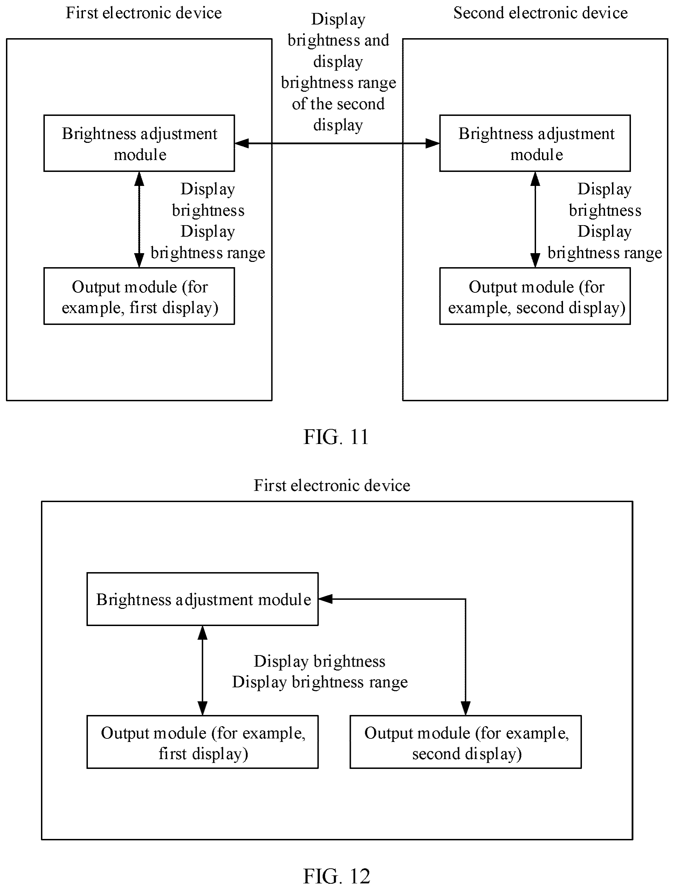

For example, FIG. 11 is a diagram of a principle of implementing brightness adjustment according to an embodiment of this application. As shown in FIG. 11, a first electronic device and a second electronic device are different electronic devices, such as an in-vehicle terminal device and a tablet computer. The first electronic device includes a brightness adjustment module and an output module (such as a first display), and the second electronic device includes a brightness adjustment module and an output module (such as a second display). The brightness adjustment module of the first electronic device may obtain display brightness and a display brightness range of the first display, and the brightness adjustment module of the second electronic device may obtain display brightness and a display brightness range of the second display. When a user needs to adjust the display brightness of the second display by using the first display, the brightness adjustment module of the first electronic device may obtain the display brightness and the display brightness range of the second display from the brightness adjustment module of the second electronic device, adjust the display brightness of the second display based on the display brightness and the display brightness ranges of the first display and the second display, and synchronously adjust transparency of a mask that is on the first display and that is projected from the second display, or synchronously adjust transparency of all masks on the first display.

For example, FIG. 12 is a diagram of another principle of implementing brightness adjustment according to an embodiment of this application. As shown in FIG. 12, a first electronic device and a second electronic device are a same electronic device, for example, an in-vehicle terminal device. The first electronic device includes a brightness adjustment module and at least two output modules (such as a first display and a second display). The brightness adjustment module may obtain display brightness and display brightness ranges of the first display and the second display. When a user needs to adjust the display brightness of the second display by using the first display, the brightness adjustment module may adjust the display brightness of the second display based on the display brightness and the display brightness ranges of the first display and the second display, and synchronously adjust transparency of a mask that is on the first display and that is projected from the second display, or synchronously adjust transparency of all masks on the first display.

Based on the foregoing solution, the first electronic device may display two areas on the first display of the first electronic device. The two areas each are covered with a mask. The display brightness of the first area after covering with the mask is equal to the display brightness of the first display before covering with the mask, or the perceived brightness of the first area after covering with the mask is equal to the perceived brightness of the first display before covering with the mask. The display brightness of the second area after covering with the mask is equal to the display brightness of the second display, or the perceived brightness of the second area after covering with the mask is equal to the perceived brightness of the second display. In this way, when adjusting the display brightness of the second display by using the first display, the user can intuitively perceive brightness adjustment effect of the second display based on brightness adjustment effect of the second area displayed on the first display, thereby improving brightness adjustment efficiency and adjustment effect of the display. Alternatively, the first electronic device may display two areas on the first display of the first electronic device. The two areas each are covered with a mask. The display brightness of the first area and the second area after covering with the mask is equal to the display brightness of the second display, or the perceived brightness of the first area and the second area after covering with the mask is equal to the perceived brightness of the second display. In this way, when adjusting the display brightness of the second display by using the first display, the user can intuitively perceive brightness adjustment effect of the second display based on brightness adjustment effect of the first area and the second area displayed on the first display, thereby improving brightness adjustment efficiency and adjustment effect of the display.

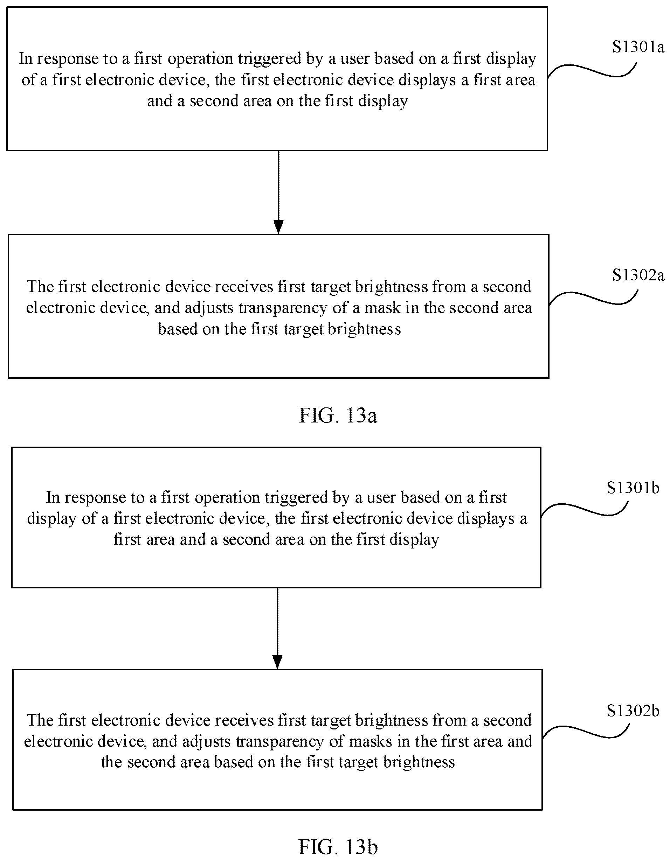

FIG. 13a is a schematic flowchart of a brightness adjustment method according to an embodiment of this application. As shown in FIG. 13a, a procedure of the method may include the following steps.

S1301a: In response to a first operation triggered by a user based on a first display of a first electronic device, the first electronic device displays a first area and a second area on the first display.

The first operation indicates to start adjusting display brightness of a second display of a second electronic device, the first area and the second area each are covered with a mask, display brightness of the first area after covering with the mask is equal to display brightness of the first display before covering with the mask, or perceived brightness of the first area after covering with the mask is equal to perceived brightness of the first display before covering with the mask, and display brightness of the second area after covering with the mask is equal to the display brightness of the second display, or perceived brightness of the second area after covering with the mask is equal to perceived brightness of the second display. For a specific manner in which the first electronic device displays the first area and the second area on the first display in response to the first operation triggered by the user based on the first display of the first electronic device, refer to the descriptions in "1. Brightness adjustment start". Details are not described herein again.

S1302a: The first electronic device receives first target brightness from the second electronic device, and adjusts transparency of the mask in the second area based on the first target brightness.

For a specific manner in which the first electronic device receives the first target brightness from the second electronic device, and adjusts the transparency of the mask in the second area based on the first target brightness, refer to the descriptions in "2. Brightness adjustment implementation". Details are not described herein again.

It should be noted that specific implementation procedures provided in the foregoing instances are merely examples of the method procedures applicable to embodiments of this application. An execution sequence of the steps may be correspondingly adjusted according to an actual requirement, or another step may be added, or some steps may be reduced.

FIG. 13b is a schematic flowchart of another brightness adjustment method according to an embodiment of this application. As shown in FIG. 13b, a procedure of the method may include the following steps.

S1301b: In response to a first operation triggered by a user based on a first display of a first electronic device, the first electronic device displays a first area and a second area on the first display.

The first operation indicates to start adjusting display brightness of a second display of a second electronic device, the first area and the second area each are covered with a mask, and display brightness of the first area and the second area after covering with the mask is equal to perceived brightness of the second display, or perceived brightness of the first area and the second area after covering with the mask is equal to perceived brightness of the second display. For a specific manner in which the first electronic device displays the first area and the second area on the first display in response to the first operation triggered by the user based on the first display of the first electronic device, refer to the descriptions in "1. Brightness adjustment start". Details are not described herein again.

S1302b: The first electronic device receives first target brightness from the second electronic device, and adjusts transparency of the masks in the first area and the second area based on the first target brightness.

For a specific manner in which the first electronic device receives the first target brightness from the second electronic device, and adjusts the transparency of the masks in the first area and the second area based on the first target brightness, refer to the descriptions in "2. Brightness adjustment implementation". Details are not described herein again.

It should be noted that specific implementation procedures provided in the foregoing instances are merely examples of the method procedures applicable to embodiments of this application. An execution sequence of the steps may be correspondingly adjusted according to an actual requirement, or another step may be added, or some steps may be reduced.

Based on the foregoing embodiments and the same concept, an embodiment of this application further provides a first electronic device. The electronic device is configured to implement the method performed by the first electronic device provided in embodiments of this application.

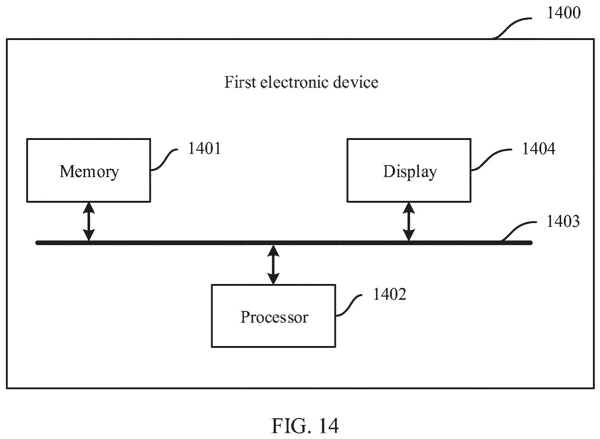

As shown in FIG. 14, a first electronic device 1400 may include a memory 1401, one or more processors 1402, and one or more computer programs (not shown in the figure). The foregoing components may be coupled through one or more communication buses 1403. Optionally, when the first electronic device 1400 is configured to implement the method performed by the first electronic device provided in embodiments of this application, the first electronic device 1400 may further include a display 1404.

The memory 1401 stores the one or more computer programs (code), and the one or more computer programs include computer instructions. The one or more processors 1402 invoke the computer instructions stored in the memory 1401, so that the first electronic device 1400 performs the brightness adjustment method provided in embodiments of this application. The display 1404 is configured to display a related user interface such as an image, a video, or an application interface.

During specific implementation, the memory 1401 may include a high-speed random access memory, and may also include a non-volatile memory, such as one or more magnetic disk storage devices, a flash memory device, or another non-volatile solid-state storage device. The memory 1401 may store an operating system (which is briefly referred to as a system below), for example, an embedded operating system such as Android, iOS, Windows, or Linux. The memory 1401 may be configured to store an implementation program of embodiments of this application. The memory 1401 may further store a network communication program. The network communication program may be used for communication with one or more additional devices, one or more user equipments, or one or more network devices. The one or more processors 1402 may be a general-purpose central processing unit (Central Processing Unit, CPU), a microprocessor, an application-specific integrated circuit (Application-Specific Integrated Circuit, ASIC), or one or more integrated circuits configured to control program execution of the solutions of this application.

It should be noted that FIG. 14 is merely an implementation of the first electronic device 1400 provided in this embodiment of this application. In actual application, the first electronic device 1400 may alternatively include more or fewer components. This is not limited herein.

Based on the foregoing embodiments and the same concept, an embodiment of this application further provides a computer-readable storage medium. The computer-readable storage medium stores a computer program. When the computer program is run on a computer, the computer is enabled to perform the method performed by the first electronic device in the method provided in the foregoing embodiments.

Based on the foregoing embodiments and the same concept, an embodiment of this application further provides a computer program product. The computer program product includes a computer program or instructions. When the computer program or the instructions are run on a computer, the computer is enabled to perform the method performed by the first electronic device in the method provided in the foregoing embodiments.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, a CD-ROM, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. A brightness adjustment system, wherein the brightness adjustment system comprises a first electronic device and a second electronic device;
the first electronic device is configured to: in response to a first operation triggered by a user based on a first display of the first electronic device, display a first area and a second area on the first display, wherein the first operation indicates to start adjusting display brightness of a second display of the second electronic device, the first area and the second area each are covered with a mask, display brightness of the first area after covering with the mask is equal to display brightness of the first display before covering with the mask, or perceived brightness of the first area after covering with the mask is equal to perceived brightness of the first display before covering with the mask, and display brightness of the second area after covering with the mask is equal to the display brightness of the second display, or perceived brightness of the second area after covering with the mask is equal to perceived brightness of the second display;
the second electronic device is configured to: determine first target brightness, adjust the display brightness of the second display based on the first target brightness, and send the first target brightness to the first electronic device; and
the first electronic device is further configured to adjust transparency of the mask in the second area based on the first target brightness.

2. The system according to claim 1, wherein the first electronic device is specifically configured to set, in the following manner, transparency of the mask that covers each of the first area and the second area:
obtaining first display brightness of the first display before covering with the mask and second display brightness of the second display; and
setting transparency of the mask in the first area based on the first display brightness, and setting transparency of the mask in the second area based on the second display brightness.

3. The system according to claim 1, wherein the first electronic device is specifically configured to set, in the following manner, transparency of the mask that covers each of the first area and the second area:
obtaining first display brightness of the first display before covering with the mask and second display brightness of the second display, and obtaining first ambient light brightness of an environment in which the first display is located and second ambient light brightness of an environment in which the second display is located;
determining, based on the first display brightness and the first ambient light brightness, first perceived brightness of the first display before covering with the mask, and determining second perceived brightness of the second display based on the second display brightness and the second ambient light brightness; and
setting transparency of the mask in the first area based on the first perceived brightness, and setting transparency of the mask in the second area based on the second perceived brightness.

4. The system according to claim 3, wherein the first ambient light brightness is obtained by using an ambient light sensor in the first display, or is obtained by using an ambient light sensor in a third electronic device, and the third electronic device is in a connected state with the first electronic device; and
the second ambient light brightness is obtained by using an ambient light sensor in the second display, or is obtained by using an ambient light sensor in a fourth electronic device, and the fourth electronic device is in a connected state with the second electronic device.

5. The system according to claim 3 or 4, wherein the first electronic device is specifically configured to set the transparency of the mask in the second area based on the second perceived brightness in the following manner:
when the first ambient light brightness is less than the second ambient light brightness, decreasing the transparency of the mask in the second area corresponding to the second perceived brightness or decreasing the first display brightness; or
when the first ambient light brightness is greater than or equal to the second ambient light brightness, increasing the transparency of the mask in the second area corresponding to the second perceived brightness or increasing the first display brightness.

6. The system according to any one of claims 1 to 5, wherein
the first electronic device is further configured to send a first display brightness level to the second electronic device in response to a second operation triggered by the user based on the first display, wherein the second operation indicates to adjust a display brightness level of the second display to the first display brightness level; and
the second electronic device is specifically configured to determine the first target brightness in the following manner:
receiving the first display brightness level from the first electronic device, and determining that the first target brightness is display brightness of the second display corresponding to the first display brightness level.

7. The system according to any one of claims 1 to 5, wherein the second electronic device is specifically configured to determine the first target brightness in the following manner:
determining the first target brightness in response to a third operation triggered by the user based on the first display, wherein the third operation indicates to adjust the display brightness of the second display to the first target brightness.

8. The system according to claim 6 or 7, wherein
the first electronic device is further configured to: before the response to the second operation or the third operation triggered by the user based on the first display, determine whether the first display brightness of the first display is less than the second display brightness of the second display; and
the first electronic device is further configured to: when the first display brightness is less than the second display brightness, adjust the first display brightness and the transparency of the mask in the first area based on second target brightness, wherein the second target brightness is greater than or equal to the second display brightness.

9. The system according to claim 8, wherein the first electronic device is specifically configured to adjust the transparency of the mask in the first area based on the second target brightness in the following manner:
obtaining the first ambient light brightness of the environment in which the first display is located; and
adjusting the transparency of the mask in the first area based on the second target brightness and the first ambient light brightness.

10. The system according to claim 6 or 7, wherein
the first electronic device is further configured to: before the response to the second operation or the third operation triggered by the user based on the first display, obtain a first display brightness range of the first display and a second display brightness range of the second display, and determine a third display brightness range, wherein the third display brightness range is an overlapping range between the first display brightness range and the second display brightness range; and
the first electronic device is further configured to display a brightness adjustment icon in the first area and/or a brightness adjustment icon in the second area, wherein the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon comprises the second display brightness range and the third display brightness range, the second display brightness range indicates a display brightness range of the second display, and the third display brightness range indicates a display brightness range of the second area.

11. The system according to any one of claims 6 to 10, wherein the first electronic device is specifically configured to adjust the transparency of the mask in the second area based on the first target brightness in the following manner:
obtaining the second ambient light brightness of the environment in which the second display is located; and
adjusting the transparency of the mask in the second area based on the first target brightness and the second ambient light brightness.

12. The system according to any one of claims 1 to 5, wherein the second electronic device is specifically configured to determine the first target brightness in the following manner:
determining the first target brightness in response to a fourth operation triggered by the user based on the second display, wherein the fourth operation indicates to adjust the display brightness of the second display to the first target brightness; or
obtaining the second ambient light brightness of the environment in which the second display is located, and determining, based on a first mapping relationship corresponding to the second display, that the first target brightness is display brightness corresponding to the second ambient light brightness, wherein the first mapping relationship indicates a mapping relationship between ambient light brightness of the environment and display brightness; or
determining the first target brightness based on a brightness adjustment indication of a first application, wherein the brightness adjustment indication indicates to adjust the display brightness of the second display to the first target brightness.

13. The system according to claim 12, wherein the first electronic device is specifically configured to adjust the transparency of the mask in the second area based on the first target brightness in the following manner:
obtaining the first ambient light brightness of the environment in which the first display is located and the second ambient light brightness of the environment in which the second display is located;
determining, based on the first mapping relationship corresponding to the second display, third display brightness corresponding to the second ambient light brightness and fourth display brightness corresponding to the first ambient light brightness, wherein the first mapping relationship indicates a mapping relationship between ambient light brightness of the environment and display brightness;
determining third target brightness based on the third display brightness, the fourth display brightness, and the first target brightness, wherein a difference between the third display brightness and the first target brightness is a first difference, a difference between the fourth display brightness and the third target brightness is a second difference, and the first difference is positively correlated with the second difference; and
adjusting the transparency of the mask in the second area based on the third target brightness.

14. A brightness adjustment method, applied to a first electronic device, wherein the method comprises:
in response to a first operation triggered by a user based on a first display of the first electronic device, displaying a first area and a second area on the first display, wherein the first operation indicates to start adjusting display brightness of a second display of a second electronic device, the first area and the second area each are covered with a mask, display brightness of the first area after covering with the mask is equal to display brightness of the first display before covering with the mask, or perceived brightness of the first area after covering with the mask is equal to perceived brightness of the first display before covering with the mask, and display brightness of the second area after covering with the mask is equal to the display brightness of the second display, or perceived brightness of the second area after covering with the mask is equal to perceived brightness of the second display; and
receiving first target brightness from the second electronic device, and adjusting transparency of the mask in the second area based on the first target brightness.

15. The method according to claim 14, wherein before displaying the first area and the second area on the first display of the first electronic device, the method further comprises:
obtaining first display brightness of the first display before covering with the mask and second display brightness of the second display; and
setting transparency of the mask in the first area based on the first display brightness, and setting transparency of the mask in the second area based on the second display brightness.

16. The method according to claim 14, wherein before displaying the first area and the second area on the first display of the first electronic device, the method further comprises:
obtaining first display brightness of the first display before covering with the mask and second display brightness of the second display, and obtaining first ambient light brightness of an environment in which the first display is located and second ambient light brightness of an environment in which the second display is located;
determining, based on the first display brightness and the first ambient light brightness, first perceived brightness of the first display before covering with the mask, and determining second perceived brightness of the second display based on the second display brightness and the second ambient light brightness; and
setting transparency of the mask in the first area based on the first perceived brightness, and setting transparency of the mask in the second area based on the second perceived brightness.

17. The method according to claim 16, wherein the first ambient light brightness is obtained by using an ambient light sensor in the first display, or is obtained by using an ambient light sensor in a third electronic device, and the third electronic device is in a connected state with the first electronic device; and
the second ambient light brightness is obtained by using an ambient light sensor in the second display, or is obtained by using an ambient light sensor in a fourth electronic device, and the fourth electronic device is in a connected state with the second electronic device.

18. The method according to claim 16 or 17, wherein setting the transparency of the mask in the second area based on the second perceived brightness comprises:
when the first ambient light brightness is less than the second ambient light brightness, decreasing the transparency of the mask in the second area corresponding to the second perceived brightness or decreasing the first display brightness; or
when the first ambient light brightness is greater than or equal to the second ambient light brightness, increasing the transparency of the mask in the second area corresponding to the second perceived brightness or increasing the first display brightness.

19. The method according to any one of claims 14 to 18, wherein receiving the first target brightness from the second electronic device comprises:
sending a first display brightness level to the second electronic device in response to a second operation triggered by the user based on the first display, wherein the second operation indicates to adjust a display brightness level of the second display to the first display brightness level; and
receiving the first target brightness from the second electronic device, wherein the first target brightness is display brightness of the second display that is corresponding to the first display brightness level and that is determined by the second electronic device.

20. The method according to any one of claims 14 to 18, wherein receiving the first target brightness from the second electronic device comprises:
receiving the first target brightness from the second electronic device, wherein the first target brightness is determined by the second electronic device in response to a third operation triggered by the user based on the first display, and the third operation indicates to adjust the display brightness of the second display to the first target brightness.

21. The method according to claim 19 or 20, wherein before the response to the second operation or the third operation triggered by the user based on the first display, the method further comprises:
determining whether the first display brightness of the first display is less than the second display brightness of the second display; and
when the first display brightness is less than the second display brightness, adjusting the first display brightness and the transparency of the mask in the first area based on second target brightness, wherein the second target brightness is greater than or equal to the second display brightness.

22. The method according to claim 21, wherein adjusting the transparency of the mask in the first area based on the second target brightness comprises:
obtaining the second ambient light brightness of the environment in which the second display is located; and
adjusting the transparency of the mask in the first area based on the second target brightness and the first ambient light brightness.

23. The method according to claim 19 or 20, wherein before the response to the second operation or the third operation triggered by the user based on the first display, the method further comprises:
obtaining a first display brightness range of the first display and a second display brightness range of the second display, and determining a third display brightness range, wherein the third display brightness range is an overlapping range between the first display brightness range and the second display brightness range; and
displaying a brightness adjustment icon in the first area and/or a brightness adjustment icon in the second area, wherein the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon comprises the second display brightness range and the third display brightness range, the second display brightness range indicates a display brightness range of the second display, and the third display brightness range indicates a display brightness range of the second area.

24. The method according to any one of claims 19 to 23, wherein adjusting the transparency of the mask in the second area based on the first target brightness comprises:
obtaining the second ambient light brightness of the environment in which the second display is located; and
adjusting the transparency of the mask in the second area based on the first target brightness and the second ambient light brightness.

25. The method according to any one of claims 14 to 18, wherein receiving the first target brightness from the second electronic device comprises:
receiving the first target brightness from the second electronic device, wherein the first target brightness is determined by the second electronic device in response to a fourth operation triggered by the user based on the second display, and the fourth operation indicates to adjust the display brightness of the second display to the first target brightness, or the first target brightness is display brightness that is corresponding to the second ambient light brightness and that is determined by the second electronic device based on the second ambient light brightness of the environment in which the second display is located and a first mapping relationship corresponding to the second display, and the first mapping relationship indicates a mapping relationship between ambient light brightness of the environment and display brightness, or the first target brightness is determined by the second electronic device based on a brightness adjustment indication of a first application, and the brightness adjustment indication indicates to adjust the display brightness of the second display to the first target brightness.

26. The method according to claim 25, wherein adjusting the transparency of the mask in the second area based on the first target brightness comprises:
obtaining the first ambient light brightness of the environment in which the first display is located and the second ambient light brightness of the environment in which the second display is located;
determining, based on the first mapping relationship corresponding to the second display, third display brightness corresponding to the second ambient light brightness and fourth display brightness corresponding to the first ambient light brightness, wherein the first mapping relationship indicates a mapping relationship between ambient light brightness of the environment and display brightness;
determining third target brightness based on the third display brightness, the fourth display brightness, and the first target brightness, wherein a difference between the third display brightness and the first target brightness is a first difference, a difference between the fourth display brightness and the third target brightness is a second difference, and the first difference is positively correlated with the second difference; and
adjusting the transparency of the mask in the second area based on the third target brightness.

27. A brightness adjustment system, wherein the brightness adjustment system comprises a first electronic device and a second electronic device;
the first electronic device is configured to: in response to a first operation triggered by a user based on a first display of the first electronic device, display a first area and a second area on the first display, wherein the first operation indicates to start adjusting display brightness of a second display of the second electronic device, the first area and the second area each are covered with a mask, and display brightness of the first area and the second area after covering with the mask is equal to perceived brightness of the second display, or perceived brightness of the first area and the second area after covering with the mask is equal to perceived brightness of the second display;
the second electronic device is configured to: determine first target brightness, adjust the display brightness of the second display based on the first target brightness, and send the first target brightness to the first electronic device; and
the first electronic device is further configured to adjust transparency of the masks in the first area and the second area based on the first target brightness.

28. The system according to claim 27, wherein the first electronic device is specifically configured to set, in the following manner, transparency of the mask that covers each of the first area and the second area:
obtaining second display brightness of the second display; and
setting the transparency of the masks in the first area and the second area based on the second display brightness.

29. The system according to claim 27, wherein the first electronic device is specifically configured to set, in the following manner, transparency of the mask that covers each of the first area and the second area:
obtaining second display brightness of the second display, and obtaining second ambient light brightness of an environment in which the second display is located;
determining second perceived brightness of the second display based on the second display brightness and the second ambient light brightness; and
setting the transparency of the masks in the first area and the second area based on the second perceived brightness.

30. The system according to claim 29, wherein the first electronic device is specifically configured to set the transparency of the masks in the first area and the second area based on the second perceived brightness in the following manner:
obtaining first display brightness of the first display, and obtaining first ambient light brightness of an environment in which the first display is located; and
when the first ambient light brightness is less than the second ambient light brightness, decreasing the transparency of the masks in the first area and the second area corresponding to the second perceived brightness or decreasing the first display brightness; or
when the first ambient light brightness is greater than or equal to the second ambient light brightness, increasing the transparency of the masks in the first area and the second area corresponding to the second perceived brightness or increasing the first display brightness.

31. The system according to claim 30, wherein the first ambient light brightness is obtained by using an ambient light sensor in the first display, or is obtained by using an ambient light sensor in a third electronic device, and the third electronic device is in a connected state with the first electronic device; and
the second ambient light brightness is obtained by using an ambient light sensor in the second display, or is obtained by using an ambient light sensor in a fourth electronic device, and the fourth electronic device is in a connected state with the second electronic device.

32. The system according to any one of claims 27 to 31, wherein
the first electronic device is further configured to send a first display brightness level to the second electronic device in response to a second operation triggered by the user based on the first display, wherein the second operation indicates to adjust a display brightness level of the second display to the first display brightness level; and
the second electronic device is specifically configured to determine the first target brightness in the following manner:
receiving the first display brightness level from the first electronic device, and determining that the first target brightness is display brightness of the second display corresponding to the first display brightness level.

33. The system according to any one of claims 27 to 31, wherein the second electronic device is specifically configured to determine the first target brightness in the following manner:
determining the first target brightness in response to a third operation triggered by the user based on the first display, wherein the third operation indicates to adjust the display brightness of the second display to the first target brightness.

34. The system according to claim 32 or 33, wherein
the first electronic device is further configured to: before the response to the second operation or the third operation triggered by the user based on the first display, determine whether the first display brightness of the first display is less than the second display brightness of the second display; and
the first electronic device is further configured to: when the first display brightness is less than the second display brightness, adjust the first display brightness based on second target brightness, wherein the second target brightness is greater than or equal to the second display brightness.

35. The system according to claim 32 or 33, wherein
the first electronic device is further configured to: before the response to the second operation or the third operation triggered by the user based on the first display, obtain a first display brightness range of the first display and a second display brightness range of the second display, and determine a third display brightness range, wherein the third display brightness range is an overlapping range between the first display brightness range and the second display brightness range; and
the first electronic device is further configured to display a brightness adjustment icon in the first area and/or a brightness adjustment icon in the second area, wherein the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon comprises the second display brightness range and the third display brightness range, the second display brightness range indicates a display brightness range of the second display, and the third display brightness range indicates display brightness ranges of the first area and the second area.

36. The system according to any one of claims 32 to 35, wherein the first electronic device is specifically configured to adjust the transparency of the masks in the first area and the second area based on the first target brightness in the following manner:
obtaining the second ambient light brightness of the environment in which the second display is located; and
adjusting the transparency of the masks in the first area and the second area based on the first target brightness and the second ambient light brightness.

37. The system according to any one of claims 27 to 31, wherein the second electronic device is specifically configured to determine the first target brightness in the following manner:
determining the first target brightness in response to a fourth operation triggered by the user based on the second display, wherein the fourth operation indicates to adjust the display brightness of the second display to the first target brightness; or
obtaining the second ambient light brightness of the environment in which the second display is located, and determining, based on a first mapping relationship corresponding to the second display, that the first target brightness is display brightness corresponding to the second ambient light brightness, wherein the first mapping relationship indicates a mapping relationship between ambient light brightness of the environment and display brightness; or
determining the first target brightness based on a brightness adjustment indication of a first application, wherein the brightness adjustment indication indicates to adjust the display brightness of the second display to the first target brightness.

38. The system according to claim 37, wherein the first electronic device is specifically configured to adjust the transparency of the masks in the first area and the second area based on the first target brightness in the following manner:
obtaining the first ambient light brightness of the environment in which the first display is located and the second ambient light brightness of the environment in which the second display is located;
determining, based on the first mapping relationship corresponding to the second display, third display brightness corresponding to the second ambient light brightness and fourth display brightness corresponding to the first ambient light brightness, wherein the first mapping relationship indicates a mapping relationship between ambient light brightness of the environment and display brightness;
determining third target brightness based on the third display brightness, the fourth display brightness, and the first target brightness, wherein a difference between the third display brightness and the first target brightness is a first difference, a difference between the fourth display brightness and the third target brightness is a second difference, and the first difference is positively correlated with the second difference; and
adjusting the transparency of the masks in the first area and the second area based on the third target brightness.

39. A brightness adjustment method, applied to a first electronic device, wherein the method comprises:
in response to a first operation triggered by a user based on a first display of the first electronic device, displaying a first area and a second area on the first display, wherein the first operation indicates to start adjusting display brightness of a second display of a second electronic device, the first area and the second area each are covered with a mask, and display brightness of the first area and the second area after covering with the mask is equal to perceived brightness of the second display, or perceived brightness of the first area and the second area after covering with the mask is equal to perceived brightness of the second display; and
receiving first target brightness from the second electronic device, and adjusting transparency of the masks in the first area and the second area based on the first target brightness.

40. The method according to claim 39, wherein before displaying the first area and the second area on the first display of the first electronic device, the method further comprises:
obtaining second display brightness of the second display; and
setting the transparency of the masks in the first area and the second area based on the second display brightness.

41. The method according to claim 39, wherein before displaying the first area and the second area on the first display of the first electronic device, the method further comprises:
obtaining second display brightness of the second display, and obtaining second ambient light brightness of an environment in which the second display is located;
determining second perceived brightness of the second display based on the second display brightness and the second ambient light brightness; and
setting the transparency of the masks in the first area and the second area based on the second perceived brightness.

42. The method according to claim 41, wherein setting the transparency of the masks in the first area and the second area based on the second perceived brightness comprises:
obtaining first display brightness of the first display, and obtaining first ambient light brightness of an environment in which the first display is located; and
when the first ambient light brightness is less than the second ambient light brightness, decreasing the transparency of the masks in the first area and the second area corresponding to the second perceived brightness or decreasing the first display brightness; or
when the first ambient light brightness is greater than or equal to the second ambient light brightness, increasing the transparency of the masks in the first area and the second area corresponding to the second perceived brightness or increasing the first display brightness.

43. The method according to claim 42, wherein the first ambient light brightness is obtained by using an ambient light sensor in the first display, or is obtained by using an ambient light sensor in a third electronic device, and the third electronic device is in a connected state with the first electronic device; and
the second ambient light brightness is obtained by using an ambient light sensor in the second display, or is obtained by using an ambient light sensor in a fourth electronic device, and the fourth electronic device is in a connected state with the second electronic device.

44. The method according to any one of claims 39 to 43, wherein receiving the first target brightness from the second electronic device comprises:
sending a first display brightness level to the second electronic device in response to a second operation triggered by the user based on the first display, wherein the second operation indicates to adjust a display brightness level of the second display to the first display brightness level; and
receiving the first target brightness from the second electronic device, wherein the first target brightness is display brightness of the second display that is corresponding to the first display brightness level and that is determined by the second electronic device.

45. The method according to any one of claims 39 to 43, wherein receiving the first target brightness from the second electronic device comprises:
receiving the first target brightness from the second electronic device, wherein the first target brightness is determined by the second electronic device in response to a third operation triggered by the user based on the first display, and the third operation indicates to adjust the display brightness of the second display to the first target brightness.

46. The method according to claim 44 or 45, wherein before the response to the second operation or the third operation triggered by the user based on the first display, the method further comprises:
determining whether the first display brightness of the first display is less than the second display brightness of the second display; and
when the first display brightness is less than the second display brightness, adjusting the first display brightness based on second target brightness, wherein the second target brightness is greater than or equal to the second display brightness.

47. The method according to claim 44 or 45, wherein before the response to the second operation or the third operation triggered by the user based on the first display, the method further comprises:
obtaining a first display brightness range of the first display and a second display brightness range of the second display, and determining a third display brightness range, wherein the third display brightness range is an overlapping range between the first display brightness range and the second display brightness range; and
displaying a brightness adjustment icon in the first area and/or a brightness adjustment icon in the second area, wherein the brightness adjustment icon displayed in the first area is a control of the first display, the brightness adjustment icon displayed in the second area is a control of the first display or the second display, the brightness adjustment icon is used by the user to adjust the display brightness of the second display, a brightness adjustment range of the brightness adjustment icon comprises the second display brightness range and the third display brightness range, the second display brightness range indicates a display brightness range of the second display, and the third display brightness range indicates a display brightness range of the second area.

48. The method according to any one of claims 44 to 47, wherein adjusting the transparency of the masks in the first area and the second area based on the first target brightness comprises:
obtaining the second ambient light brightness of the environment in which the second display is located; and
adjusting the transparency of the masks in the first area and the second area based on the first target brightness and the second ambient light brightness.

49. The method according to any one of claims 39 to 43, wherein receiving the first target brightness from the second electronic device comprises:
receiving the first target brightness from the second electronic device, wherein the first target brightness is determined by the second electronic device in response to a fourth operation triggered by the user based on the second display, and the fourth operation indicates to adjust the display brightness of the second display to the first target brightness, or the first target brightness is display brightness that is corresponding to the second ambient light brightness and that is determined by the second electronic device based on the second ambient light brightness of the environment in which the second display is located and a first mapping relationship corresponding to the second display, and the first mapping relationship indicates a mapping relationship between ambient light brightness of the environment and display brightness, or the first target brightness is determined by the second electronic device based on a brightness adjustment indication of a first application, and the brightness adjustment indication indicates to adjust the display brightness of the second display to the first target brightness.

50. The method according to claim 49, wherein adjusting the transparency of the masks in the first area and the second area based on the first target brightness comprises:
obtaining the first ambient light brightness of the environment in which the first display is located and the second ambient light brightness of the environment in which the second display is located;
determining, based on the first mapping relationship corresponding to the second display, third display brightness corresponding to the second ambient light brightness and fourth display brightness corresponding to the first ambient light brightness, wherein the first mapping relationship indicates a mapping relationship between ambient light brightness of the environment and display brightness;
determining third target brightness based on the third display brightness, the fourth display brightness, and the first target brightness, wherein a difference between the third display brightness and the first target brightness is a first difference, a difference between the fourth display brightness and the third target brightness is a second difference, and the first difference is positively correlated with the second difference; and
adjusting the transparency of the masks in the first area and the second area based on the third target brightness.

51. An electronic device, wherein the electronic device comprises:
a processor, a memory, and one or more programs, wherein
the one or more programs are stored in the memory, the one or more programs comprise instructions, and when the instructions are executed by the processor, the electronic device is enabled to perform the method according to any one of claims 14 to 26, or perform the method according to any one of claims 39 to 50.

52. A computer-readable storage medium, wherein the computer-readable storage medium is configured to store a computer program, and when the computer program is run on a computer, the computer is enabled to perform the method according to any one of claims 14 to 26, or perform the method according to any one of claims 39 to 50.

53. A computer program product, comprising a computer program, wherein when the computer program is run on a computer, the computer is enabled to perform the method according to any one of claims 14 to 26, or perform the method according to any one of claims 39 to 50.
